# EUROPEAN PATENT APPLICATION

(11) **EP 4 773 533 A1**
(43) Date of publication of application: **08.07.2026**
(21) Application number: 24869824.3
(22) Date of filing: 04.06.2024
(51) Int. Cl.: H04L 1/1812

(54) **HARQ-ACK GENERATION METHOD, HARQ-ACK RECEIVING METHOD, DEVICE, AND STORAGE MEDIUM**

(30) Priority: 26.09.2023 CN 202311274653
(71) Applicant: ZTE CORPORATION, Shenzhen, Guangdong 518057 (CN)
(72) Inventor: GOU, Wei, Shenzhen, Guangdong 518057 (CN); HAN, Xianghui, Shenzhen, Guangdong 518057 (CN); WEI, Xingguang, Shenzhen, Guangdong 518057 (CN); LIU, Xing, Shenzhen, Guangdong 518057 (CN); SHI, Jing, Shenzhen, Guangdong 518057 (CN)
(74) Representative: Vossius & Partner Patentanwälte Rechtsanwälte mbB
(86) International application number: PCT/CN2024/097190
(87) International publication number: WO 2025/066262

(57) **Abstract**

Provided are a HARQ-ACK generating method, a HARQ-ACK receiving method, a device, and a storage medium. The HARQ-ACK generating method includes the following: at least one of first information, second information, or third information is received; according to a predefined rule, a HARQ-ACK for a DL reception is determined based on information acquired from at least one of the first information, the second information, or the third information.

## Description

This application claims priority to Chinese Patent Application No. 202311274653.4 filed with the China National Intellectual Property Administration on Sep. 26, 2023, entitled "HARQ-ACK Generating Method, HARQ-ACK Receiving Method, Device and Storage Medium", the disclosure of which is incorporated herein by reference in its entirety.

### TECHNICAL FIELD

The embodiments of the present disclosure relate to the technical field of communication technologies, for example, to a hybrid automatic repeat request (HARQ)-acknowledgment (ACK) generating method, an HARQ-ACK receiving method, a device, and a storage medium.

### BACKGROUND

In the existing new radio (NR) standard, a generation manner of the HARQ-ACK is defined. However, the generation manner of the HARQ-ACK in the existing NR standard is not applicable in some cases.

### SUMMARY

The embodiments of the present disclosure provide an HARQ-ACK generating method, an HARQ-ACK receiving method, a device, and a storage medium, which can improve the diversity of HARQ-ACK generation and are applicable to various situations.

For the above purpose, the embodiments of the present disclosure provide an HARQ-ACK generating method. The HARQ-ACK generating method includes: at least one of first information, second information, or third information is received; and according to a predefined rule, an HARQ-ACK for a downlink (DL) reception is determined based on information acquired from at least one of the first information, the second information, or the third information. The DL reception includes at least one of the following: a semi-persistent scheduling (SPS) configuration, a physical downlink shared channel (PDSCH) scheduled based on downlink control information (DCI), a PDSCH with repetitions, multiple PDSCHs scheduled by a single DCI, a periodic or semi-persistent channel state information reference signal (CSI-RS), or a periodic physical downlink control channel (PDCCH). The information acquired from the first information includes at least one of the following: a location of an orthogonal frequency division multiplexing (OFDM) symbol of the DL reception, a location of a frequency domain resource of the DL reception, or a location of a slot of the DL reception. The information acquired from the second information includes at least one of the following: a location of a first-type OFDM symbol, a location of a first-type slot, or a location of a first-type resource. The information acquired from the third information includes at least one of the following: a transmission mode of the DL reception.

For the above purpose, the embodiments of the present disclosure provide an HARQ-ACK receiving method. The HARQ-ACK receiving method includes: at least one of first information, second information, or third information is transmitted; according to a predefined rule, an HARQ-ACK for a DL reception is received based on information acquired from at least one of the first information, the second information, or the third information. The DL reception includes at least one of the following: an SPS configuration, a PDSCH scheduled based on DCI, a PDSCH with repetitions, multiple PDSCHs scheduled by a single DCI, a periodic or semi-persistent CSI-RS, or a periodic PDCCH. The information acquired from the first information includes at least one of the following: a location of an OFDM symbol of the DL reception, a location of a frequency domain resource of the DL reception, or a location of a slot of the DL reception. The information acquired from the second information includes at least one of the following: a location of a first-type OFDM symbol, a location of a first-type slot, or a location of a first-type resource. The information acquired from the third information includes at least one of the following: a transmission mode of the DL reception.

For the above purpose, the embodiments of the present disclosure provide a computer device. The computer device includes a memory, a processor and a computer program stored in the memory and executable on the processor. The processor, when executing the computer program, is configured to implement the HARQ-ACK generating method or the HARQ-ACK receiving method according to the embodiments of the present disclosure.

For the above purpose, the embodiments of the present disclosure provide a computer-readable storage medium. The computer-readable storage medium stores a computer program. The computer program, when executed by a processor, is configured to implement the HARQ-ACK generating method or the HARQ-ACK receiving method according to the embodiments of the present disclosure.

### BRIEF DESCRIPTION OF DRAWINGS

FIG. 1 is a schematic flowchart of an HARQ-ACK generating method according to an embodiment of the present disclosure.
FIG. 2 is an example diagram illustrating a transmission mode according to an embodiment of the present disclosure.
FIG. 3 is an example diagram illustrating a time-frequency resource used for a Co-time Co-frequency full-duplex (CCFD) operation according to an embodiment of the present disclosure.
FIG. 4 is an example diagram illustrating determining an HARQ-ACK for a DL reception according to an embodiment of the present disclosure.
FIG. 5 is an example diagram illustrating determining an HARQ-ACK for a DL reception according to an embodiment of the present disclosure.
FIG. 6 is an example diagram illustrating determining an HARQ-ACK for a DL reception according to an embodiment of the present disclosure.
FIG. 7 is an example diagram illustrating determining an HARQ-ACK for a DL reception according to an embodiment of the present disclosure.
FIG. 8 is an example diagram illustrating determining an HARQ-ACK for a DL reception according to an embodiment of the present disclosure.
FIG. 9 is an example diagram illustrating determining an HARQ-ACK for a DL reception according to an embodiment of the present disclosure.
FIG. 10 is an example diagram illustrating determining a usage manner of a resource according to an embodiment of the present disclosure.
FIG. 11 is an example diagram illustrating determining a usage manner of a resource according to an embodiment of the present disclosure.
FIG. 12 is a schematic flowchart of an HARQ-ACK receiving method according to an embodiment of the present disclosure.
FIG. 13 is a schematic structural diagram of an HARQ-ACK generating apparatus according to an embodiment of the present disclosure.
FIG. 14 is a schematic structural diagram of an HARQ-ACK receiving apparatus according to an embodiment of the present disclosure.
FIG. 15 is a schematic structural diagram of a computer device according to an embodiment of the present disclosure.

### DETAILED DESCRIPTION

To make the purposes, technical solutions and advantages of the present disclosure more clear, the embodiments of the present disclosure are described in detail hereinafter with reference to the drawings. It should be noted that, under the premise of no conflict, the embodiments in the present disclosure and the technical features in the embodiments can be arbitrarily combined with each other.

It should be understood that the specific embodiments described herein are merely used to explain the present disclosure, but are not intended to limit the present disclosure.

In the following description, suffixes such as "module", "part" or "unit" used to denote elements are merely used to facilitate the description of the present disclosure, and have no specific meaning in themselves. Therefore, "module", "component" or "unit" may be used in a mixed manner.

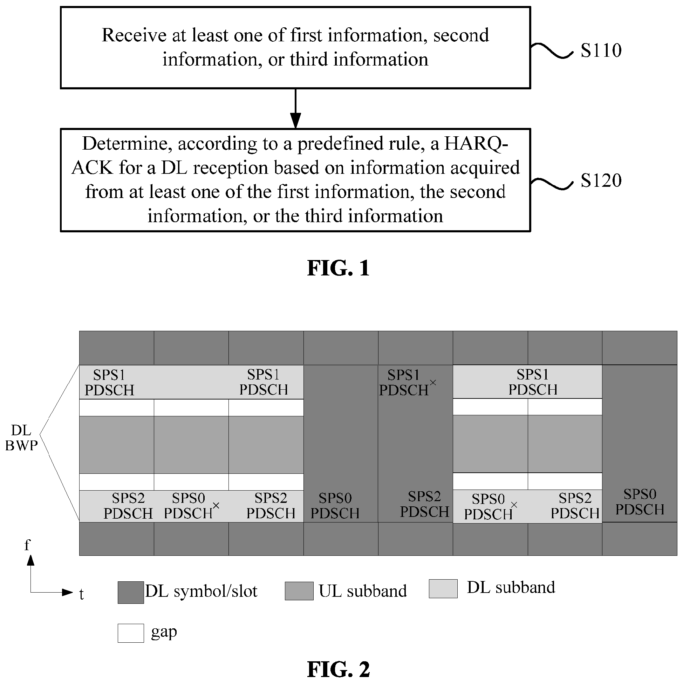

FIG. 1 is a schematic flowchart of an HARQ-ACK generating method according to an embodiment of the present disclosure. The HARQ-ACK generating method may be executed by a user equipment (UE) side. As shown in FIG. 1, the HARQ-ACK generating method includes S110 and S120.

In S110, at least one of first information, second information and third information is received.

In S120, according to a predefined rule, an HARQ-ACK for a DL reception is determined based on information acquired from at least one of the first information, the second information, or the third information.

The DL reception includes at least one of of the following: an SPS configuration, a PDSCH scheduled based on DCI, a PDSCH with repetitions, multiple PDSCHs scheduled by a single DCI, a periodic or semi-persistent CSI-RS, or a periodic PDCCH; the information acquired from the first information includes at least one of the following: a location of an OFDM symbol of the DL reception, a location of a frequency domain resource of the DL reception, or a location of a slot of the DL reception; the information acquired from the second information includes at least one of the following: a location of a first-type OFDM symbol, a location of a first-type slot, or a location of a first-type resource; and the information acquired from the third information includes at least one of the following: a transmission mode of the DL reception.

The location of the OFDM symbol may include an index of the OFDM symbol and the number of the OFDM symbol.

In the embodiments of the present disclosure, the first-type resource includes a subband full-duplex (SBFD) subband or a CCFD subband. The SBFD subband or the CCFD subband is configured in a DL OFDM symbol or a flexible OFDM symbol. The SBFD subband includes an uplink (UL) subband and a DL subband. The first-type OFDM symbol refers to an OFDM symbol configured with the first-type resource, and the second-type OFDM symbol refers to an OFDM symbol not configured with the first-type resource. The first-type slot includes a slot configured with the first-type OFDM symbol, and a second-type slot includes a slot not configured with the first-type OFDM symbol.

To improve UL coverage, UL latency and UL capacity in a time division duplex (TDD) system, SBFD technology has been proposed. A UL subband may be configured in a DL symbol or a DL slot, and in a flexible (F) symbol or an F slot. The UL subband is configured based on a resource block (RB). A symbol configured with the SBFD subband is referred to as an SBFD symbol, and a slot containing the SBFD symbol is referred to as an SBFD slot. A symbol not configured with the SBFD subband is referred to as a non-SBFD symbol (i.e., a regular symbol), and a slot not containing the SBFD symbol is referred to as a non-SBFD slot.

For a repetitive or periodic UL transmission or DL reception, in a case where the UE is aware of configuration of the SBFD symbol or the SBFD slot, the following transmission modes can be supported by the UE.

Option 1: the UL transmission or the DL reception is performed only in the SBFD symbols or only in the non-SBFD symbols. In other words, all UL transmissions of one UL transmission procedure are performed only in the SBFD symbols or only in the non-SBFD symbols, and likewise, all DL receptions of one DL reception procedure are performed only in the SBFD symbols or only in the non-SBFD symbols. For example, a first UL transmission of one UL transmission procedure is performed in symbols of a specific type (e.g., the SBFD symbols or the non-SBFD symbols), a first DL reception of one DL reception procedure is performed in symbols of a specific type (e.g., the SBFD symbols or the non-SBFD symbols), and a second UL transmission of the same UL transmission procedure or a second DL reception of the same DL reception procedure is performed in symbols of the same type as the first UL transmission or the first DL reception respectively.

Option 2: the UL transmission or the DL reception may be performed in both the SBFD symbols and the non-SBFD symbols. In other words, different UL transmissions of one UL transmission procedure may be performed in the SBFD symbols and in the non-SBFD symbols, and likewise, different DL receptions of one DL reception procedure may be performed in the SBFD symbols and in the non-SBFD symbols. For example, a first UL transmission of one UL transmission procedure is performed in symbols of a specific type (e.g., the SBFD symbols or the non-SBFD symbols), a first DL reception of one DL reception procedure is performed in symbols of a specific type (e.g., the SBFD symbols or the non-SBFD symbols), and a second UL transmission of the same one UL transmission procedure or a second DL reception of the same one DL reception procedure is performed in symbols of a different type from the first UL transmission or the first DL reception respectively.

Further, the above Option 1 may be further divided into two sub-options.

Option 1-1: the UL transmission or the DL reception is performed only in the SBFD symbols. In other words, all UL transmissions of one UL transmission procedure are performed only in the SBFD symbols, and likewise, all DL receptions of one DL reception procedure are performed only in the SBFD symbols. For example, a first UL transmission of one UL transmission procedure is performed in the SBFD symbols, a first DL reception of one DL reception procedure is performed in the SBFD symbols, and a second UL transmission of the same UL transmission procedure or a second DL reception of the same DL reception procedure is also performed in the SBFD symbols.

Option 1-2: the UL transmission or the DL reception is performed only in the non-SBFD symbols. In other words, all UL transmissions of one UL transmission procedure are performed only in the non-SBFD symbols, and likewise, all DL receptions of one DL reception procedure are performed only in the non-SBFD symbols. For example, a first UL transmission of one UL transmission procedure is performed in the non-SBFD symbols, a first DL reception of one DL reception procedure is performed in the non-SBFD symbols, and a second UL transmission of the same UL transmission procedure or a second DL reception of the same DL reception procedure is also performed in the non-SBFD symbols.

The above-mentioned UL transmission includes at least one of the following: PUSCH with repetitions, PUCCH with repetitions, a CG PUSCH, a TBoMS, multiple PUSCHs scheduled by a single DCI, a periodic or semi-persistent SRS, a periodic or semi-persistent CSI-RS, a periodic or semi-persistent PUCCH, or a PDCCH. The above-mentioned DL reception includes at least one of the following: PDSCH with repetitions, an SPS PDSCH, or multiple PDSCHs scheduled by a single DCI.

In one embodiment, FIG. 2 is an example diagram illustrating a transmission mode. As shown in FIG. 2, it is assumed that the DL reception includes the SPS configuration, and the transmission mode is illustrated based on the SPS configuration.

FIG. 2 shows the periodic positions of an SPS configuration with index 1. If the SPS configuration is executed based on Option 1-1, the SPS PDSCH of the SPS configuration cannot be executed in a fifth slot, because the symbol type of the SPS PDSCH is a non-SBFD symbol, while in the fifth slot, the symbol corresponding to the SPS PDSCH is not the symbol type required by the SPS configuration.

FIG. 2 shows the periodic positions of an SPS configuration with index 0. If the SPS configuration is executed based on Option 1-2, the SPS PDSCH of the SPS configuration cannot be executed in the second slot and the sixth slot, because the symbol type of the SPS PDSCH is an SBFD symbol, while in the second slot and the sixth slot, the symbol corresponding to the the SPS PDSCH is not the symbol type required by the SPS configuration.

FIG. 2 shows the periodic positions of an SPS configuration with index 0. If the SPS configuration is executed based on Option 2, the SPS PDSCH of the SPS configuration can be executed in a first slot, a third slot, a fifth slot, and a seventh slot. In the first slot, the third slot, the fifth slot, and the seventh slot, the SPS PDSCH of the SPS configuration can be executed in the SBFD symbol, and in the fifth slot, the SPS PDSCH of the SPS configuration can be executed in the non-SBFD symbol.

Based on the above description, to further improve the system efficiency and spectrum efficiency, the present disclosure provides the CCFD operation. First, the configuration of a CCFD resource is provided as follows:

In one carrier, the base station configures, in a frequency domain, an RB set based on contiguous RBs for a CCFD operation, and configures, in a time domain, one or more slots or symbols for the CCFD operation. In this manner, a set of time-frequency resources (denoted as resources A) for the CCFD operation is obtained. At least from the perspective of the base station, the resources A can be used for CCFD. In other words, the base station is capable of simultaneously transmitting DL signals and receiving UL signals on the same time and the same frequency by using the resources A.

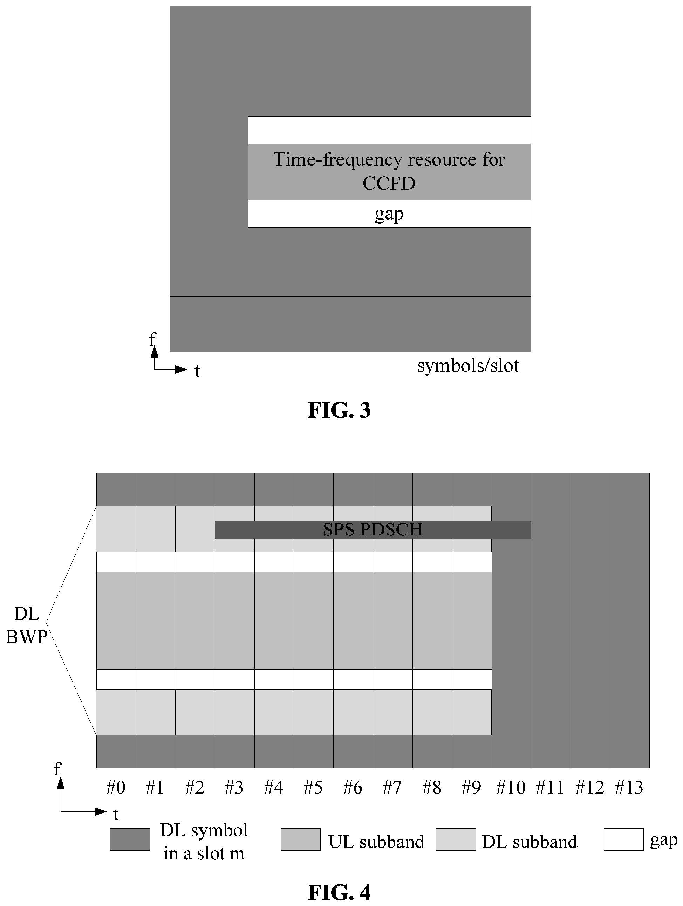

In the present disclosure, a symbol configured with resources A is referred to as a CCFD symbol, and a slot configured with resources A is referred to as a CCFD slot. A symbol not configured with resources A is referred to as a non-CCFD symbol (e.g., a regular symbol), and a slot not configured with resources A is referred to as a non-CCFD slot (e.g., a regular slot). By way of example, FIG. 3 is an example diagram illustrating time-frequency resources used for a CCFD operation according to an embodiment of the present disclosure.

Since the channel interference environments in a CCFD symbol/slot and in a non-CCFD symbol/slot are different, there exists a significant performance difference between UL transmissions or DL receptions performed in the CCFD symbol/slot and UL transmissions or DL receptions performed in the non-CCFD symbol/slot. Accordingly, the following transmission mode is introduced to support UL transmissions and DL receptions with repetition or periodicity.

Option 1A: the UL transmission or the DL reception is performed only in the CCFD symbols or the non-CCFD symbols. In other words, all UL transmissions of one UL transmission procedure are performed only in the CCFD symbol or only in the non-CCFD symbol, and all DL receptions of one DL reception procedure are performed only in the CCFD symbols or only in the non-CCFD symbols. For example, a first UL transmission of one UL transmission procedure is performed in symbols of a specific type (e.g., the CCFD symbols or the non-CCFD symbols), a first DL reception of one DL reception procedure is performed in symbols of a specific type (e.g., the CCFD symbols or the non-CCFD symbols), and a second UL transmission of the same one UL transmission procedure is performed in symbols of the same type as the first UL transmission, or a second DL reception of the same one DL transmission procedure is performed in symbols of the same type as the first DL transmission.

Option 2A: the UL transmission or the DL reception may be performed in both the CCFD symbols and the non-CCFD symbols. In other words, different UL transmissions of one UL transmission procedure may be performed in the CCFD symbols and in the non-CCFD symbols, and likewise, different DL receptions of one DL reception procedure may be performed in the CCFD symbols and in the non-CCFD symbols. For example, a first UL transmission of one UL transmission procedure is performed in symbols of a specific type (e.g., the CCFD symbols or the non-CCFD symbols), a first DL reception of one DL reception procedure is performed in symbols of a specific type (e.g., the CCFD symbols or the non-CCFD symbols), and a second UL transmission of the same one UL transmission procedure or a second DL reception of the same one DL reception procedure is performed in symbols of a different type from the first UL transmission or the first DL reception respectively.

Furthermore, the above Option 1A may also be divided into two options:

Option 1A-1: the UL transmission or the DL reception is performed only in the CCFD symbols. In other words, all UL transmissions of one UL transmission procedure are performed only in the CCFD symbols, and likewise, all DL receptions of one DL reception procedure are performed only in the CCFD symbols. For example, a first UL transmission of one UL transmission procedure is performed in the CCFD symbols, a first DL reception of one DL reception procedure is performed in the CCFD symbols, and a second UL transmission of the same UL transmission procedure or a second DL reception of the same DL reception procedure is also performed in the CCFD symbols.

Option 1A-2: the UL transmission or the DL reception is performed only in the non-CCFD symbols. In other words, all UL transmissions of one UL transmission procedure are performed only in the non-CCFD symbols, and likewise, all DL receptions of one DL reception procedure are performed only in the non-CCFD symbols. For example, a first UL transmission of one UL transmission procedure is performed in the non-CCFD symbols, a first DL reception of one DL reception procedure is performed in the non-CCFD symbols, and a second UL transmission of the same UL transmission procedure or a second DL reception of the same DL reception procedure is also performed in the non-CCFD symbols.

The above-mentioned UL transmission includes at least one of the following: PUSCH with repetitions, PUCCH with repetitions, a CG PUSCH, a TBoMS, multiple PUSCHs scheduled by a single DCI, a periodic or semi-persistent SRS, a periodic or semi-persistent CSI-RS, a periodic or semi-persistent PUCCH, or a PDCCH. The above-mentioned DL reception includes at least one of the following: PDSCH with repetitions, an SPS PDSCH, or multiple PDSCHs scheduled by a single DCI.

In the present disclosure, a semi-static PDSCH (also referred to as the SPS PDSCH) transmission is taken as an example to describe an SBFD-based channel or signal configuration method and an SBFD-based channel or signal receiving method. The semi-static PDSCH is also applicable to a CCFD-based channel or signal configuration method and a CCFD-based channel or signal receiving method. Moreover, the semi-static PDSCH is applicable to other channels, such as the PDSCH with repetitions, the PUSCH with repetitions, the PUCCH with repetitions, the CG PUSCH, the TBoMS, the multiple PUSCHs scheduled by a single DCI, the multiple PDSCHs scheduled by a single DCI, the periodic or semi-persistent SRS, the periodic or semi-persistent CSI-RS, the periodic or semi-persistent PUCCH, and the PDCCH.

The method described below mainly focuses on SBFD-based transmission or reception. The method may also be applicable to CCFD-based transmission or reception, for example, by replacing an SBFD symbol/slot with a corresponding CCFD symbol/slot, and by replacing a non-SBFD symbol/slot with a corresponding non-CCFD symbol/slot.

Accordingly, an SBFD-based transmission mode may also be replaced with a CCFD-based transmission mode. For example, the SBFD-based transmission mode may be replaced with the CCFD-based transmission mode by replacing the above Option 1 with the above Option 1A, replacing the above Option 2 with the above Option 2A, replacing the above Option 1-1 with the above Option 1A-1, and replacing the above Option 1-2 with the above Option 1A-2.

In one embodiment, determining the HARQ-ACK for the DL reception based on information acquired from at least one of the first information, the second information, and the third information may include the following. When HARQ-ACKs for DL receptions corresponding to one or more activated DL reception configurations are to be multiplexed into a HARQ-ACK codebook (i.e., the HARQ-ACK codebook includes only HARQ-ACKs for SPS PDSCHs), the HARQ-ACK for the DL reception is determined according to a predefined rule.

The DL reception includes the SPS configuration.

### Method 1:

In one embodiment, determining the HARQ-ACK for the DL reception according to the predefined rule includes at least one of the following: when one DL reception configuration is configured with a transmission mode of transmitting only in a first-type OFDM symbol, and a symbol corresponding to a DL reception corresponding to the one DL reception configuration in a slot is determined as a second-type OFDM symbol, the HARQ-ACK for the DL reception is not generated; when one DL reception configuration is configured with a transmission mode of transmitting only in a second-type OFDM symbol, and a symbol corresponding to a DL reception corresponding to the one DL reception configuration in a slot is determined as a first-type OFDM symbol, the HARQ-ACK for the DL reception is not generated; or when one DL reception configuration is configured with a transmission mode that different DL receptions corresponding to the one DL reception configuration are transmitted in a first-type OFDM symbol and a second-type OFDM symbol in different slots, and symbols corresponding to the different DL receptions corresponding to the one DL reception configuration in a slot are determined as the first-type OFDM symbol and the second-type OFDM symbol, the HARQ-ACK for the DL reception is not generated.

In an example, it is assumed that the SBFD symbol or the SBFD slot is configured for the UE, in other words, the UE is aware of a location of an SBFD resource. Determining, according to the predefined rule, the HARQ-ACK for the DL reception includes at least one of the following:

If one SPS configuration is determined or configured to be transmitted only in the SBFD symbol (based on the above Option 1-1), i.e., all SPS PDSCHs of the one SPS configuration are transmitted only in the SBFD symbol in different slots, and a symbol corresponding to the SPS PDSCH of the one SPS configuration in the slot is determined as the non-SBFD symbol (in other words, the symbol corresponding to the SPS PDSCH in the slot include the SBFD symbol and the non-SBFD symbol, i.e., not all of the symbols corresponding to the SPS PDSCH in the slot are the SBFD symbol), the HARQ-ACK for the SPS PDSCH is not generated by the UE. Otherwise, the HARQ-ACK for the SPS PDSCH in the slot is generated by the UE.

If one SPS configuration is determined or configured to be transmitted only in the non-SBFD symbol (excluding a UL symbol) (based on the above Option 1-2), i.e., all SPS PDSCHs of the one SPS configuration are transmitted only in the non-SBFD symbol in different slots, and a symbol corresponding to the SPS PDSCH of the SPS configuration in the slot is determined as the SBFD symbol (in other words, the symbol corresponding to the SPS PDSCH in the slot includes the SBFD symbol and the non-SBFD symbol, i.e., not all of the symbols corresponding to the SPS PDSCH in the slot are the non-SBFD symbol), the HARQ-ACK for the SPS PDSCH is not generated by the UE. Otherwise, the HARQ-ACK for the SPS PDSCH in the slot is generated by the UE.

If one SPS configuration is determined or configured based on the above Option 2, i.e., different SPS PDSCHs of the SPS configuration may be transmitted in different slots in the SBFD symbol and the non-SBFD symbol, and symbols corresponding to the SPS PDSCH of the SPS configuration in the slot includes theSBFD symbol and the non-SBFD symbol (in other words, not all of the symbols corresponding to the SPS PDSCH in the slot are the SBFD symbol or the non-SBFD symbol), the HARQ-ACK for the SPS PDSCH is not generated by the UE. Otherwise, the HARQ-ACK for the SPS PDSCH in the slot is generated by the UE.

If the UE determines that the above HARQ-ACKs for SPS PDSCHs need to be transmitted in a slot n, the HARQ-ACKs for SPS PDSCHs are to be multiplexed in the HARQ-ACK codebook and transmitted in a PUCCH resource in the slot n. According to Method 1, and the HARQ-ACK for the DL reception is determined according to at least one of the following rules by the UE.

### Rule 1:

In one embodiment, determining, according to the predefined rule, the HARQ-ACK for the DL reception includes the following: when a DL reception corresponding to one activated DL reception configuration is configured to be received in a slot m, and a symbol type of at least one symbol of the DL reception in the slot m is different from a symbol type associated with the one activated DL reception configuration, the HARQ-ACK for the DL reception is not generated.

In an example, the UE is configured to receive an SPS PDSCH of one activated SPS configuration in the slot m. If a symbol type of at least one symbol of the SPS PDSCH in the slot m is different from a symbol type associated with the SPS configuration, the HARQ-ACK for the SPS PDSCH is not generated.

Different symbol types mean that the SBFD symbol and the non-SBFD symbol are different types of symbols. The symbol type corresponding to the symbol in the slot may be determined according to SBFD symbol configuration information or SBFD slot configuration information. If one SPS PDSCH is configured to be received in one slot, the symbol used by the one SPS PDSCH in the one slot may be determined according to time domain resource configuration information of the SPS PDSCH. In this manner, the symbol type corresponding to the symbol of the SPS PDSCH in the one slot may be determined.

FIG. 4 is an example diagram illustrating determining a HARQ-ACK for a DL reception according to an embodiment of the present disclosure. As shown in FIG. 4, the SPS configuration corresponding to one SPS PDSCH is determined or configured to be associated with the SBFD symbol or the SBFD slot, i.e., the SPS PDSCHs corresponding to the SPS configuration are only transmitted in the SBFD symbol or the DL subband. In other words, the transmission mode of the SPS configuration is based on the above Option 1-1, i.e., the symbol type corresponding to the SPS PDSCH is the SBFD symbol type. In FIG. 4, symbols of the SPS PDSCH are symbol #3 to symbol #10. In the slot m, each of symbol #0 to symbol #9 is the SBFD symbol, and each of symbols #10 to symbol #13 is not configured with the SBFD symbol, i.e., each of the symbol #0 to the symbol #9 is the SBFD symbol, and each of the symbol #10 to the symbol #13 is the non-SBFD symbol. In the slot m, the symbol #10 among the symbol #3 to the symbol #10 of the SPS PDSCH is the non-SBFD symbol, and the rest symbols are SBFD symbols. Since the symbol type of symbol #10 is different from the symbol type associated with the SPS configuration corresponding to the SPS PDSCH, the SPS PDSCH in the slot m satisfies that the symbol type of at least one of the SPS PDSCH is different from the symbol type associated with the SPS configuration corresponding to the SPS PDSCH, the HARQ-ACK for the SPS PDSCH is not generated.

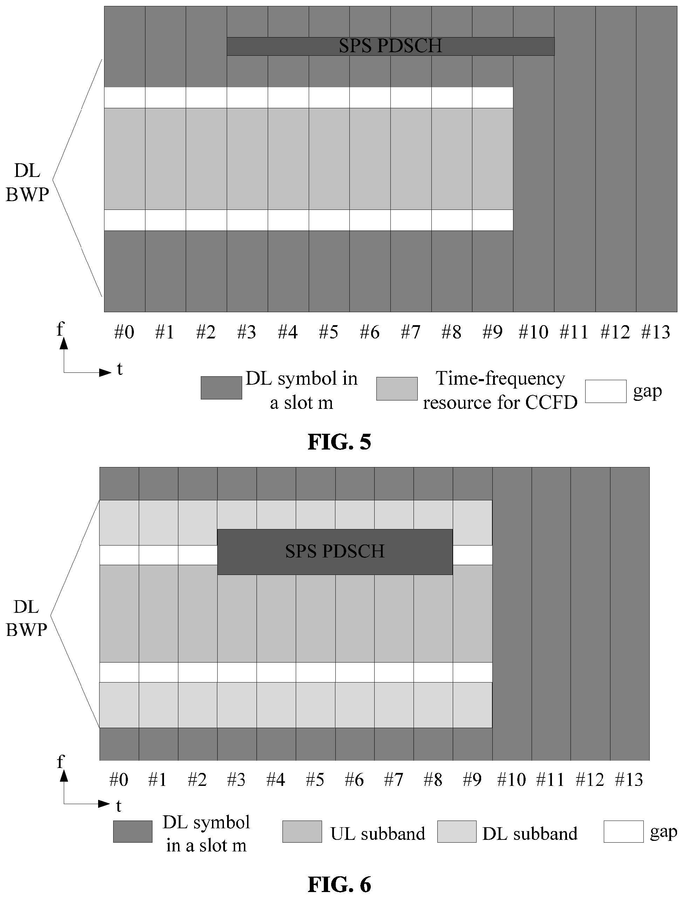

In an example, FIG. 5 is an example diagram illustrating determining a HARQ-ACK for a DL reception according to an embodiment of the present disclosure. For example, as shown in FIG. 5, the SPS configuration corresponding to one SPS PDSCH is determined or configured to be associated with the CCFD symbol or the CCFD slot, i.e., the SPS PDSCHs corresponding to the SPS configuration are only transmitted in the CCFD symbol. In other words, the transmission mode of the SPS configuration is based on the above Option A-1, i.e., the symbol type corresponding to the SPS PDSCH is the CCFD symbol type. In FIG. 5, symbols of the SPS PDSCH are symbol #3 to symbol #10. In the slot m, each of symbol #0 to symbol #9 is the CCFD symbol, and each of symbols #10 to symbol #13 is not configured with the CCFD symbol, i.e., each of the symbol #0 to the symbol #9 is the CCFD symbol, and each of the symbol #10 to the symbol #13 is the non-CCFD symbol. In the slot m, the symbol #10 among the symbol #3 to the symbol #10 of the SPS PDSCH is the non-CCFD symbol, and the rest symbols are CCFD symbols. Since the symbol type of symbol #10 is different from the symbol type associated with the SPS configuration corresponding to the SPS PDSCH, the SPS PDSCH in the slot m satisfies that the symbol type of at least one of the SPS PDSCH is different from the symbol type associated with the SPS configuration corresponding to the SPS PDSCH, the HARQ-ACK for the SPS PDSCH is not generated.

### Rule 2:

In one embodiment, determining, according to the predefined rule, the HARQ-ACK for the DL reception may include the following: when a DL reception corresponding to one activated DL reception configuration is configured to be received in a slot m, and a symbol type of at least one symbol of the DL reception in the slot m is different from a symbol type associated with the one activated DL reception configuration, the HARQ-ACK for the DL reception is generated.

In an example, the UE is configured to receive an SPS PDSCH of one activated SPS configuration in the slot m. If a symbol type of at least one symbol of the SPS PDSCH in the slot m is different from a symbol type associated with the SPS configuration, the HARQ-ACK for the SPS PDSCH is generated. Furthermore, the SPS PDSCH is transmitted only in a symbol of a symbol type same as the symbol type associated with the SPS configuration. It should be noted that the modulation and coding of the SPS PDSCH is unchanged, assuming that it is still transmitted in all symbols corresponding to the SPS PDSCH, and data planned to be transmitted in symbols of different symbol types is not mapped for transmission in these symbols, i.e., these symbols are punctured. In this manner, after the SPS PDSCH changes, re-encoding the SPS PDSCH can be avoided, facilitating repeated transmission of the SPS PDSCH. In another manner, resources for actual transmission of the SPS PDSCH (i.e., excluding a symbol of a symbol type different from the symbol type associated with the SPS PDSCH) are determined, the SPS PDSCH is modulated and encoded according to a size of the resources for actual transmission, and the SPS PDSCH is transmitted using the resources for actual transmission.

### Rule 3:

In one embodiment, determining, according to the predefined rule, the HARQ-ACK for the DL reception may include the following: when a DL reception corresponding to one activated DL reception configuration is configured to be received in a slot m, and a symbol type of all symbols of the DL reception in the slot m is different from a symbol type associated with the one activated DL reception configuration, the HARQ-ACK for the DL reception is not generated.

In an example, the UE is configured to receive an SPS PDSCH of one activated SPS configuration in the slot m. If the symbol type of all symbols of the SPS PDSCH in the slot m is different from a symbol type associated with the SPS configuration, the HARQ-ACK for the DL reception is not generated.

### Rule 4:

In one embodiment, determining, according to the predefined rule, the HARQ-ACK for the DL reception may include the following: when a DL reception corresponding to one activated DL reception configuration is configured to be received in a slot m, and a symbol type of all symbols of the DL reception in the slot m is different from a symbol type associated with the one activated DL reception configuration, the HARQ-ACK for the DL reception is generated.

In an example, the UE is configured to receive an SPS PDSCH of one activated SPS configuration in the slot m. If the symbol type of all symbols of the SPS PDSCH in the slot m is different from a symbol type associated with the SPS configuration, the HARQ-ACK for the DL reception, such as the HARQ-ACK for a negative acknowledgement (NACK), is generated.

### Rule 5:

In one embodiment, when a DL reception corresponding to one activated DL reception configuration is configured to be received in a slot m, and a symbol type of all symbols of the DL reception in the slot m is the same as a symbol type associated with the one activated DL reception configuration, the HARQ-ACK for the DL reception is generated.

In an example, the UE is configured to receive an SPS PDSCH of one activated SPS configuration in the slot m. If the symbol type of all symbols of the SPS PDSCH in the slot m is the same as a symbol type associated with the SPS configuration, the HARQ-ACK for the DL reception is generated, for example, according to a decoding result of the SPS PDSCH.

### Rule 6:

In one embodiment, when a DL reception corresponding to one activated DL reception configuration is configured to be received in a slot m, and a symbol type of at least two symbols of the DL reception in the slot m is the same as a symbol type associated with the one activated DL reception configuration, the HARQ-ACK for the DL reception is generated.

In an example, the UE is configured to receive an SPS PDSCH of one activated SPS configuration in the slot m. If a symbol type of at least two symbols of the SPS PDSCH in the slot m is the same as a symbol type associated with the SPS configuration, the HARQ-ACK for the SPS PDSCH is generated, for example, according to the decoding result of the SPS PDSCH. It should be noted that the modulation and coding of the SPS PDSCH is unchanged, assuming that it is still transmitted in all symbols corresponding to the SPS PDSCH, and data planned to be transmitted in symbols of different symbol types is not mapped for transmission in these symbols, i.e., these symbols are punctured. In this manner, after a resource of the SPS PDSCH changes, re-encoding the SPS PDSCH can be avoided, facilitating repeated transmission of the SPS PDSCH. In another manner, resources for actual transmission of the SPS PDSCH (i.e., excluding a symbol of a symbol type different from the symbol type associated with the SPS PDSCH) are determined, the SPS PDSCH is modulated and encoded according to a size of the resources for actual transmission, and the SPS PDSCH is transmitted using the resources for actual transmission.

### Rule 7:

In one embodiment, when a DL reception corresponding to one activated DL reception configuration is configured to be received in a slot m, and a symbol type of symbols with a ratio more than a set ratio of the DL reception in the slot m is different from a symbol type associated with the one activated DL reception configuration, the HARQ-ACK for the DL reception is not generated.

The set ratio may be agreed as: 1/2, 1/3 or 1/4. In an example, the UE is configured to receive an SPS PDSCH of one activated SPS configuration in the slot m. If a symbol type of symbols with a ratio more than a set ratio of the SPS PDSCH in the slot m is different from a symbol type associated with the SPS configuration, the HARQ-ACK for the SPS PDSCH is not generated. Otherwise, the HARQ-ACK for the SPS PDSCH is generated.

In one embodiment, determining, according to the predefined rule, the HARQ-ACK for the DL reception may include the following: in response to a DL reception with repeated transmission corresponding to one activated DL reception configuration, according to the predefined rule, the HARQ-ACK for the DL reception with repeated transmission is determined.

### Rule 8:

In one embodiment, determining, according to the predefined rule, the HARQ-ACK for the DL reception with repeated transmission may include the following: when the DL reception corresponding to one activated DL reception configuration is configured to be received in slots from the slot m to a slot m-R+1, according to the predefined rule, whether to generate the HARQ-ACK for the DL reception is determined only in one or more slots except the slot m-R+1.

Herein, the value R indicates the number of retransmissions. In an example, the UE is configured to receive an SPS PDSCH of one activated SPS configuration in slots from the slot m to the slot m-R+1. If the SPS PDSCH is transmitted only in one or more slots other than the slot m-R+1, the UE determines whether to generate the HARQ-ACK for the SPS PDSCH in accordance with any one of the above Rule 1 to Rule 7.

### Rule 9:

In one embodiment, when the DL reception corresponding to one activated DL reception configuration is configured to be received in slots from the slot m to a slot m-R+1, according to the predefined rule, whether to generate the HARQ-ACK for the DL reception is always determined in the slot m-R+1.

In an example, the UE is configured to receive an SPS PDSCH of one activated SPS configuration in slots from the slot m to the slot m-R+1, and always determine whether to generate the HARQ-ACK for the SPS PDSCH in a first slot (i.e., the slot m-R+1) in accordance with any one of the above Rule 1 to Rule 7. If it is determined that the HARQ-ACK for the SPS PDSCH is generated, the HARQ-ACK for the SPS PDSCH is generated regardless of a determination result of a subsequent slot.

### Rule 10:

In one embodiment, when the DL reception corresponding to one activated DL reception configuration is configured to be received in slots from the slot m to a slot m-R+1, according to the predefined rule, the DL reception for the DL reception is determined in R slots one by one. When it is determined to generate the HARQ-ACK for the DL reception in one of the R slots, the HARQ-ACK for the DL reception is generated. When it is determined not to generate the HARQ-ACK for the DL reception in any of the R slots, the HARQ-ACK for the DL reception is not generated.

In an example, the UE is configured to receive an SPS PDSCH of one activated SPS configuration in slots from the slot m to the slot m-R+1, and determine whether to generate the HARQ-ACK for the SPS PDSCH in accordance with any one of the above Rule 1 to Rule 7 in R slots one by one. If it is determined to generate the HARQ-ACK for the SPS PDSCH in one of the R slots, the HARQ-ACK for the SPS PDSCH is generated. If it is determined not to generate the HARQ-ACK for the SPS PDSCH in any of the R slots, the HARQ-ACK for the SPS PDSCH is not generated.

### Rule 11:

In one embodiment, when the DL reception corresponding to one activated DL reception configuration is configured to be received in slots from the slot m to a slot m-R+1, according to the predefined rule, the DL reception for the DL reception is determined in R slots one by one. When it is determined not to generate the HARQ-ACK for the DL reception in one of the R slots, the HARQ-ACK for the DL reception is not generated. When it is determined to generate the HARQ-ACK for the DL reception in each of the R slots, the HARQ-ACK for the DL reception is generated.

In an example, the UE is configured to receive an SPS PDSCH of one activated SPS configuration in slots from the slot m to the slot m-R+1, and determine whether to generate the HARQ-ACK for the SPS PDSCH in accordance with any one of the above Rule1 to Rule 7 in R slots one by one. If it is determined not to generate the HARQ-ACK for the SPS PDSCH in one of the R slots, the HARQ-ACK for the SPS PDSCH is not generated. If it is determined to generate the HARQ-ACK for the SPS PDSCH in any of the R slots, the HARQ-ACK for the SPS PDSCH is generated.

In the embodiments of the present disclosure, the SBFD in Rule 1 to Rule 11 may be replaced with the CCFD. Alternatively, the symbol types in Rule 1 to Rule 11 may be classified into the CCFD symbol type and the non-CCFD symbol type, respectively. In this manner, Rule 1 to Rule 11 can be applicable to the CCFD-based transmission of the SPS PDSCH.

### Method 2:

In one embodiment, determining, according to the predefined rule, the HARQ-ACK for the DL reception may include the following: when a resource of a DL reception corresponding to one DL reception configuration in one slot fully overlaps a resource of an UL subband in the first-type OFDM symbol, the HARQ-ACK for the DL reception in the one slot is not generated; when a resource of a DL reception corresponding to one DL reception configuration in one slot is located within a resource of an UL subband in the first-type OFDM symbol, the HARQ-ACK for the DL reception in the one slot is not generated; or, when a resource of the DL reception corresponding to one DL reception configuration in one slot partially overlaps a resource of an UL subband in the first-type OFDM symbol, the HARQ-ACK for the DL reception in the one slot is not generated.

Alternatively, determining, according to the predefined rule, the HARQ-ACK for the DL reception may include the following: when a resource of a DL reception corresponding to one DL reception configuration in one slot fully overlaps a resource of an UL subband in the first-type OFDM symbol, the HARQ-ACK for the DL reception is generated in the one slot; when a resource of a DL reception corresponding to one DL reception configuration in one slot is located within a resource of an UL subband in the first-type OFDM symbol, the HARQ-ACK for the DL reception is generated in the one slot; or, when a resource of the DL reception corresponding to one DL reception configuration in one slot partially overlaps a resource of an UL subband in the first-type OFDM symbol, the HARQ-ACK for the DL reception is generated in the one slot.

If it is determined that the above HARQ-ACKs for SPS PDSCHs need to be transmitted in a slot n of the UL transmission by the UE, then these HARQ-ACKs are multiplexed in the HARQ-ACK codebook and transmitted in a PUCCH resource in the slot n of the UL transmission. Method 2 includes the following cases, and the HARQ-ACK for the DL reception is determined according to at least one of the following rules by the UE.

### Rule 12:

In one embodiment, when a DL reception corresponding to one activated DL reception configuration is configured to be received in a slot m, and a resource of the DL reception in the slot m fully overlaps the resource of the UL subband in the first-type OFDM symbol, the HARQ-ACK for the DL reception in the slot m is not generated.

In an example, the UE is configured to receive an SPS PDSCH of one activated SPS configuration in the slot m. If a resource of the SPS PDSCH in the slot m fully overlaps the resource of the UL subband of the SBFD symbol, the HARQ-ACK for the SPS PDSCH is not generated.

For example, one SPS configuration is configured to be associated with the SBFD symbol. FIG. 6 is an example diagram illustrating determining a HARQ-ACK for a DL reception in an embodiment of the present disclosure. In FIG. 6, all of the symbols of the SPS PDSCH in the one SPS configuration are SBFD symbols, in other words, in the slot of FIG. 6, the symbol type of the SPS PDSCH is the same as an associated symbol type. However, since the resource of the SPS PDSCH fully overlaps the resource of the UL subband of the SBFD symbol, the HARQ-ACK for the SPS PDSCH is not generated. Although it is determined to generate the HARQ-ACK for the SPS PDSCH according to conditions in Rule 1 to Rule 7, it is determined not to generate the HARQ-ACK for the SPS PDSCH according to conditions in Rule 12. Therefore, two determination results are combined, and as long as one of the two determination results determines not to generate the HARQ-ACK, the final result is that the HARQ-ACK for the SPS PDSCH is not generated.

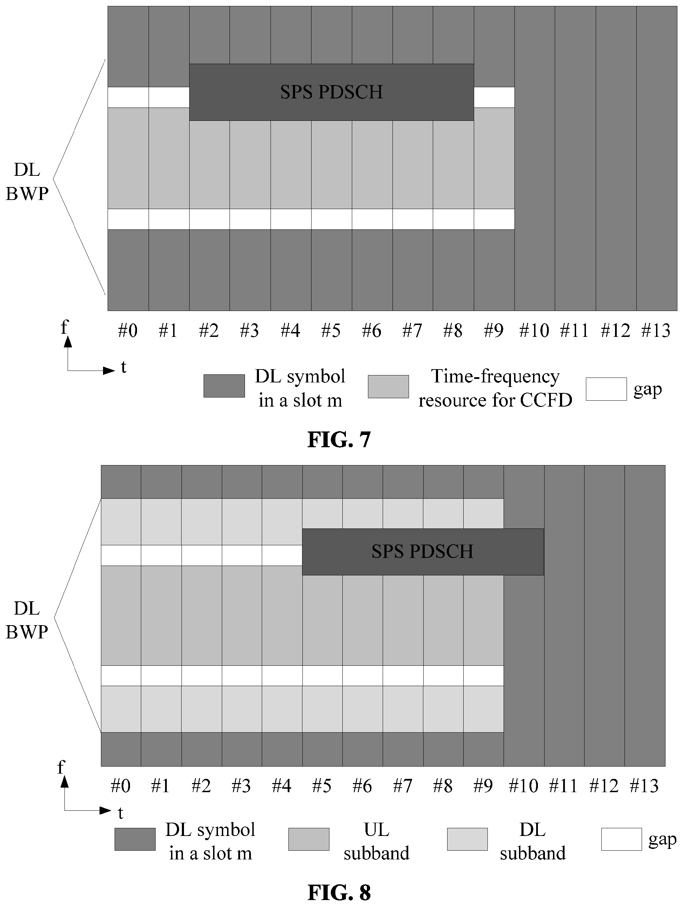

For example, one SPS configuration is configured to be associated with the CCFD symbol. FIG. 7 is an example diagram illustrating determining a HARQ-ACK for a DL reception in an embodiment of the present disclosure. In FIG. 7, all of the symbols of the SPS PDSCH in the one SPS configuration are CCFD symbols, in other words, in the slot of FIG. 7, the symbol type of the SPS PDSCH is the same as an associated symbol type. However, since the resource of the SPS PDSCH fully overlaps the resource of the resources A of the CCFD symbol, the HARQ-ACK for the SPS PDSCH is not generated. Although it is determined to generate the HARQ-ACK for the SPS PDSCH according to conditions in Rule 1 to Rule 7, it is determined not to generate the HARQ-ACK for the SPS PDSCH according to conditions in Rule 12. Therefore, two determination results are combined, and as long as one of the two determination results determines not to generate the HARQ-ACK, the final result is that the HARQ-ACK for the SPS PDSCH is not generated.

### Rule 13:

In one embodiment, when a DL reception corresponding to one activated DL reception configuration is configured to be received in a slot m, and a resource of the DL reception in the slot m is located within the resource of the UL subband in the first-type OFDM symbol, the HARQ-ACK for the DL reception in the slot m is not generated.

In an example, the UE is configured to receive an SPS PDSCH of one activated SPS configuration in the slot m. If a resource of the SPS PDSCH in the slot m is located within the resource of the UL subband of the SBFD symbol, in other words, the resource of the SPS PDSCH completely falls into the resource of the UL subband, the HARQ-ACK for the SPS PDSCH is not generated.

### Rule 14:

In one embodiment, when a DL reception corresponding to one activated DL reception configuration is configured to be received in a slot m, and a resource of the DL reception in the slot m partially overlaps the resource of the UL subband in the first-type OFDM symbol, the HARQ-ACK for the DL reception in the slot m is not generated.

In an example, the UE is configured to receive an SPS PDSCH of one activated SPS configuration in the slot m. If part of resources of the SPS PDSCH in the slot m are located within the resource of the UL subband of the SBFD symbol, in other words, the part of resources of the SPS PDSCH fall into the resource of the UL subband, the HARQ-ACK for the SPS PDSCH is not generated.

### Rule 15:

In one embodiment, when a DL reception corresponding to one activated DL reception configuration is configured to be received in a slot m, and a resource of the DL reception in the slot m fully overlaps the resource of the UL subband in the first-type OFDM symbol, the HARQ-ACK for the DL reception in the slot m is generated.

In an example, the UE is configured to receive an SPS PDSCH of one activated SPS configuration in the slot m. If a resource of the SPS PDSCH in the slot m fully overlaps the resource of the UL subband of the SBFD symbol, the HARQ-ACK for the SPS PDSCH is generated. It should be noted that the modulation and coding of the SPS PDSCH is unchanged, assuming that it is still transmitted in all symbols corresponding to the SPS PDSCH, and data planned to be transmitted in symbols of different symbol types is not mapped for transmission in these symbols, i.e., these symbols are punctured. In this manner, after a resource of the SPS PDSCH changes, re-encoding the SPS PDSCH can be avoided, facilitating repeated transmission of the SPS PDSCH. In another manner, resources for actual transmission of the SPS PDSCH (i.e., excluding a symbol of a symbol type different from the symbol type associated with the SPS PDSCH) are determined, the SPS PDSCH is modulated and encoded according to a size of the resources for actual transmission, and the SPS PDSCH is transmitted using the resources for actual transmission.

### Rule 16:

In one embodiment, when a DL reception corresponding to one activated DL reception configuration is configured to be received in a slot m, and a resource of the DL reception in the slot m is located within the resource of the UL subband in the first-type OFDM symbol, the HARQ-ACK for the DL reception in the slot m is generated.

In an example, the UE is configured to receive an SPS PDSCH of one activated SPS configuration in the slot m. If a resource of the SPS PDSCH in the slot m is located within the resource of the UL subband of the SBFD symbol, in other words, the resource of the SPS PDSCH completely falls into the resource of the UL subband, the HARQ-ACK for the SPS PDSCH is generated. For example, the HARQ-ACK for a NACK is always generated.

### Rule 17:

In one embodiment, when a DL reception corresponding to one activated DL reception configuration is configured to be received in a slot m, and a resource of the DL reception in the slot m partially overlaps the resource of the UL subband in the first-type OFDM symbol, the HARQ-ACK for the DL reception in the slot m is generated.

In an example, the UE is configured to receive an SPS PDSCH of one activated SPS configuration in the slot m. If part of resources of the SPS PDSCH in the slot m are located within the resource of the UL subband of the SBFD symbol, in other words, the part of resources of the SPS PDSCH fall into the resource of the UL subband, the HARQ-ACK for the SPS PDSCH is generated. It should be noted that the modulation and coding of the SPS PDSCH is unchanged, assuming that it is still transmitted in all symbols corresponding to the SPS PDSCH, and data planned to be transmitted in symbols of different symbol types is not mapped for transmission in these symbols, i.e., these symbols are punctured. In this manner, after a resource of the SPS PDSCH changes, re-encoding the SPS PDSCH can be avoided, facilitating repeated transmission of the SPS PDSCH. In another manner, resources for actual transmission of the SPS PDSCH (i.e., excluding a symbol of a symbol type different from the symbol type associated with the SPS PDSCH) are determined, the SPS PDSCH is modulated and encoded according to a size of the resources for actual transmission, and the SPS PDSCH is transmitted using the resources for actual transmission.

In one embodiment, determining, according to the predefined rule, the HARQ-ACK for the DL reception may include the following: a DL reception with repeated transmission corresponding to one activated DL reception configuration, according to the predefined rule, the HARQ-ACK for the DL reception with repeated transmission is determined.

### Rule 18:

In one embodiment, when the DL reception corresponding to one activated DL reception configuration is configured to be received in slots from the slot m to a slot m-R+1, according to the predefined rule, whether to generate the HARQ-ACK for the DL reception is determined only in one or more slots except the slot m-R+1.

Herein, the value R indicates the number of retransmissions. In an example, the UE is configured to receive an SPS PDSCH of one activated SPS configuration in slots from the slot m to the slot m-R+1. If the SPS PDSCH is transmitted only in one or more slots other than the slot m-R+1, the UE determines whether to generate the HARQ-ACK for the SPS PDSCH in accordance with any one of the above Rule 12 to Rule 17.

### Rule 19:

In one embodiment, when the DL reception corresponding to one activated DL reception configuration is configured to be received in slots from the slot m to a slot m-R+1, according to the predefined rule, whether to generate the HARQ-ACK for the DL reception is always determined in the slot m-R+1.

In an example, the UE is configured to receive an SPS PDSCH of one activated SPS configuration in slots from the slot m to the slot m-R+1, and always determine whether to generate the HARQ-ACK for the SPS PDSCH in a first slot (i.e., the slot m-R+1) in accordance with any one of the above Rule 12 to Rule 17. If it is determined that the HARQ-ACK for the SPS PDSCH is generated, the HARQ-ACK for the SPS PDSCH is generated regardless of a determination result of a subsequent slot.

### Rule 20:

In one embodiment, when the DL reception corresponding to one activated DL reception configuration is configured to be received in slots from the slot m to a slot m-R+1, according to the predefined rule, the DL reception for the DL reception is determined in R slots one by one. When it is determined to generate the HARQ-ACK for the DL reception in one of the R slots, the HARQ-ACK for the DL reception is generated. When it is determined not to generate the HARQ-ACK for the DL reception in any of the R slots, the HARQ-ACK for the DL reception is not generated.

In an example, the UE is configured to receive an SPS PDSCH of one activated SPS configuration in slots from the slot m to the slot m-R+1, and determine whether to generate the HARQ-ACK for the SPS PDSCH in accordance with any one of the above Rule 12 to Rule 17 in R slots one by one. If it is determined to generate the HARQ-ACK for the SPS PDSCH in one of the R slots, the HARQ-ACK for the SPS PDSCH is generated. If it is determined not to generate the HARQ-ACK for the SPS PDSCH in any of the R slots, the HARQ-ACK for the SPS PDSCH is not generated.

### Rule 21:

In one embodiment, when the DL reception corresponding to one activated DL reception configuration is configured to be received in slots from the slot m to a slot m-R+1, according to the predefined rule, the DL reception for the DL reception is determined in R slots one by one. When it is determined not to generate the HARQ-ACK for the DL reception in one of the R slots, the HARQ-ACK for the DL reception is not generated. When it is determined to generate the HARQ-ACK for the DL reception in each of the R slots, the HARQ-ACK for the DL reception is generated.

In an example, the UE is configured to receive an SPS PDSCH of one activated SPS configuration in slots from the slot m to the slot m-R+1, and determine whether to generate the HARQ-ACK for the SPS PDSCH in accordance with any one of the above Rule 12 to Rule 17 in R slots one by one. If it is determined not to generate the HARQ-ACK for the SPS PDSCH in one of the R slots, the HARQ-ACK for the SPS PDSCH is not generated. If it is determined to generate the HARQ-ACK for the SPS PDSCH in any of the R slots, the HARQ-ACK for the SPS PDSCH is generated.

In the embodiments of the present disclosure, the SBFD in Rule 12 to Rule 21 may be replaced with the CCFD. Alternatively, the symbol types in Rule 12 to Rule 21 may be classified into the CCFD symbol type and the non-CCFD symbol type, respectively. In this manner, Rule 12 to Rule 21can be applicable to the CCFD-based transmission of the SPS PDSCH.

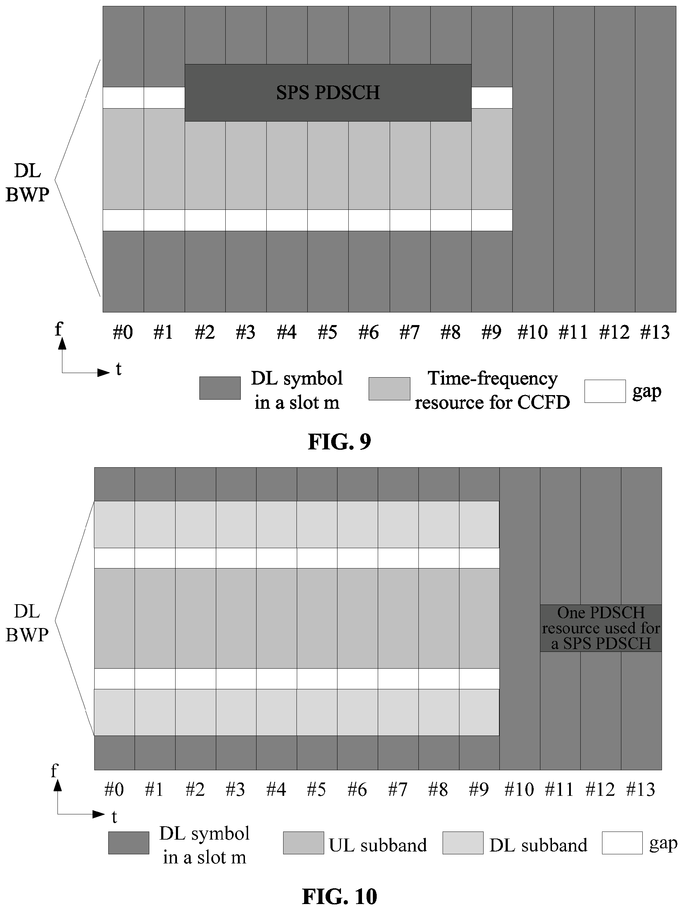

In the embodiments of the present disclosure, Rule 1 to Rule 11 based on method 1 mainly use the symbol type of the symbol of the SPS PDSCH to determine whether to generate the HARQ-ACK for the SPS PDSCH. Rule 12 to Rule 21 based on method 2 mainly use the frequency domain resource of the SPS PDSCH to determine whether to generate the HARQ-ACK for the SPS PDSCH. Under the premise of no conflict, method 1 and method 2 can be used in combination, for example, in the example of FIG. 8 and FIG. 9, i. e., the rule based on method 1 and the rule based on method 2 can be used in combination.

In the case of SBFD operation or CCFD operation, if rules of two methods are used in combination, and results of generating HARQ-ACK are the same, the results are determined as the SPS PDSCH.

In the case of SBFD operation or CCFD operation, if the rules of the two methods are used in combination, and the results of generating HARQ-ACK are different, a result of method 2 is determined as a final result.

Alternatively, in the case of SBFD operation or CCFD operation, if the rules of the two methods are used in combination, and the results of generating HARQ-ACK are different, a result of method 1 or a result of method 2 is taken as a final result according to a pre-agreed agreement (between the base station and the UE).

In one embodiment, the HARQ-ACK generating method further includes the following: when one DL reception configuration is configured as performing DL reception based on a transmission mode, and when a symbol type of a symbol of one DL reception corresponding to the one DL reception configuration is different from a symbol type associated with the one DL reception configuration and the one DL reception corresponding to the one DL reception configuration is not transmitted in one slot, according to the predefined rule, a usage manner of a resource of the one DL reception corresponding to the one DL reception configuration in the one slot is determined.

In one embodiment, determining, according to the predefined rule, a usage manner of a resource of the one DL reception corresponding to the one DL reception configuration in the one slot may include the following: when a symbol type of a symbol of one DL reception corresponding to the one DL reception configuration is different from a symbol type associated with the one DL reception configuration and the one DL reception corresponding to the one DL reception configuration is not transmitted in one slot, the resource of the one DL reception corresponding to the one DL reception is used for a data transmission based on a DCI scheduling, or the resource of the one DL reception corresponding to the one DL reception is not used for a data transmission based on a DCI scheduling.

In the embodiments of the present application, when one SPS configuration is configured or associated based on the above Option 1-1 or Option 1-2, including a case of CCFD operation in which one SPS configuration is configured or associated based on the above Option 1A-1 or Option 1A-2, a situation may occur in which one SPS PDSCH of the SPS configuration is not transmitted in one slot because a symbol type of the SPS PDSCH in the slot is different from a symbol type configured or associated with the SPS configuration. In this situation, how to process the PDSCH resource corresponding to the SPS PDSCH in the slot needs to be addressed.

To make full use of the PDSCH resource, for the above situation, the base station and the UE agree that the PDSCH resource is allowed to be used for downlink data transmission based on DCI scheduling. That is, if the PDSCH resource associated with the SPS configuration is not used for data transmission in one slot because the symbol type configured or associated with the SPS configuration is different from the symbol type of the PDSCH resource in the slot, the PDSCH resource is allowed to be used for data transmission based on DCI scheduling (or alternatively, the PDSCH resource can not be used for data transmission based on DCI scheduling).

In this case, the PDSCH resource is used to generate the HARQ-ACK for the data transmission based on the DCI scheduling.

For example, in FIG. 10, one SPS configuration is configured or associated based on Option 1-1, such that the SPS PDSCH of the SPS configuration is transmitted only in the SBFD symbol in one slot. In FIG. 10, a symbol of one SPS PDSCH of the SPS configuration is a non-SBFD symbol. Based on the above assumption, since the symbol type associated with the SPS configuration is different from the symbol type of the SPS PDSCH in the slot, the SPS PDSCH is not transmitted in the slot, that is, the SPS PDSCH is not used for data transmission of the SPS configuration. As a result, the PDSCH resource corresponding to the SPS PDSCH becomes idle. To make full use of the PDSCH resource, according to the above method, the base station may preform a data transmission scheduling based on the DCI in the PDSCH resource, and the UE may receive the data carried on the PDSCH resource after receiving the DCI. In this manner, the PDSCH resource is also used to generate the HARQ-ACK for the PDSCH based on the DCI scheduling.

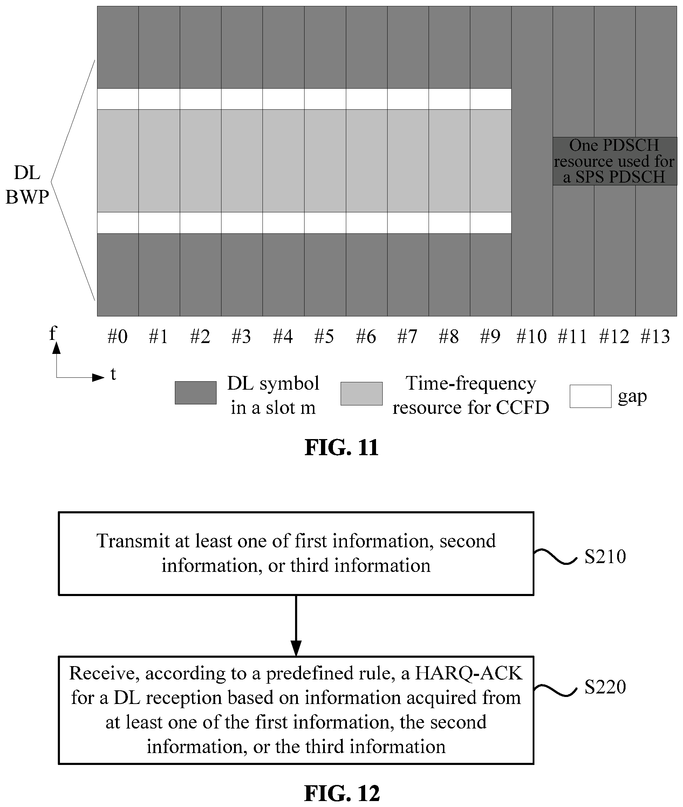

The above method is also applicable to CCFD operation. For example, in FIG. 11, one SPS configuration is configured or associated based on Option 1A-1, such that the SPS PDSCH of the SPS configuration is transmitted only in the CCFD symbol in one slot. In FIG. 11, a symbol of one SPS PDSCH of the SPS configuration is a non-CCFD symbol. Based on the above assumption, since the symbol type associated with the SPS configuration is different from the symbol type of the SPS PDSCH in the slot, the SPS PDSCH is not transmitted in the slot, that is, the SPS PDSCH is not used for data transmission of the SPS configuration. As a result, the PDSCH resource corresponding to the SPS PDSCH becomes idle. In order to make full use of the PDSCH resource, according to the above method, the base station may perform a data transmission based on DCI scheduling on the PDSCH resource, and the UE may receive data carried on the PDSCH resource after receiving the DCI. Accordingly, the PDSCH resource is also used to generate HARQ-ACK for the PDSCH based on the DCI scheduling.

In one embodiment, the HARQ-ACK generating method further includes the following:
When the first-type OFDM symbol or the second-type OFDM symbol is separately configured with a DL reception resource set, a transmission mode configured for a DL reception configuration is determined.

In one embodiment, when the first-type OFDM symbol or the second-type OFDM symbol is separately configured with a DL reception resource set, determining a transmission mode configured for a DL reception configuration may include the following: when a DL reception corresponding to the DL reception configuration is configured with a resource from a DL reception resource set corresponding to the first-type OFDM symbol, the transmission mode configured for the DL reception configuration is determined as transmitting only in the first-type OFDM symbol;when a DL reception corresponding to the DL reception configuration is configured with a resource from a DL reception resource set corresponding to the second-type OFDM symbol, the transmission mode configured for the DL reception configuration is determined as transmitting only in the second-type OFDM symbol; or when a DL reception corresponding to the DL reception configuration is configured with two resources respectively from a DL reception resource set corresponding to the first-type OFDM symbol and a DL reception resource set corresponding to the second-type OFDM symbol, the transmission mode configured for the DL reception configuration is determined as that different DL receptions corresponding to the DL reception configuration are transmitted in the first-type OFDM symbol and the second-type OFDM symbol in different slots.

In an example, it is assumed that the SBFD symbol or the non-SBFD symbol is separately configured with a PDSCH resource set.

If the PDSCH resource corresponding to one SPS configuration is configured from a PDSCH resource set corresponding to the SBFD symbol, the one SPS configuration is, by default, based on the above Option 1-1. In this case, all SPS PDSChs of the one SPS configuration are transmitted only in the SBFD symbols in each of different slots. For example, one SPS PDSCH of the one SPS configuration is transmitted only in the SBFD symbol in the slot n, and the other SPS PDSCH is transmitted only in the SBFD symbol in the slot m.

If the PDSCH resource corresponding to one SPS configuration is from a PDSCH resource set corresponding to the non-SBFD symbol, the one SPS configuration is, by default, based on the above Option1-2. In this case, all SPS PDSCHs of the one SPS configuration are transmitted only in the non-SBFD symbols in each of the different slots. For example, one SPS PDSCH of the one SPS configuration is transmitted only in the non-SBFD symbol in the slot n, and the other SPS PDSCH is transmitted only in the non-SBFD symbol in the slot m.

If one SPS configuration is configured with two PDSCH resources, and the two PDSCH resources are respectively from a PDSCH resource set corresponding to the non-SBFD symbol and a PDSCH resource set corresponding to the SBFD symbol, the one SPS configuration is, by default, based on the above Option 2. In this case, different SPS PDSCHs of the one SPS configuration are transmitted in the SBFD symbol or in the non-SBFD symbol in each of the different slots. For example, one SPS PDSCH of the one SPS configuration is transmitted only in the SBFD symbol in the slot n, and the other SPS PDSCH is transmitted only in the non-SBFD symbol in the slot m.

In one embodiment, when the transmission mode configured for the DL reception configuration is determined as transmitting only in the first-type OFDM symbol, the DL reception corresponding to the DL reception configuration is in one slot, and the resource configured for the DL reception corresponding to the DL reception configuration is a second-type OFDM symbol in the one slot, the DL reception corresponding to the DL reception configuration is not transmitted in the one slot, and the resource configured for the DL reception corresponding to the DL reception configuration is not used for a data transmission based on a DCI scheduling; or when the transmission mode configured for the DL reception configuration is determined as transmitting only in the second-type OFDM symbol, the DL reception corresponding to the DL reception configuration is in one slot, and the resource configured for the DL reception corresponding to the DL reception is a first-type OFDM symbol in the one slot, the DL reception corresponding to the DL reception configuration is not transmitted in the one slot, and the resource configured for the DL reception corresponding to the DL reception configuration is not used for a data transmission based on a DCI scheduling.

In an example, it is assumed that the SBFD symbol or the non-SBFD symbol is separately configured with the PDSCH resource set.

If one SPS configuration is determined as transmitting in the SBFD symbol according to a provenance of the PDSCH resource, however, if a transmission occasion corresponding to one SPS PDSCH of the one SPS configuration is located in one slot and the PDSCH resource corresponding to the SPS PDSCH is the non-SBFD symbol in the one slot, the SPS PDSCH is not transmitted in the one slot, and the PDSCH resource corresponding to the SPS PDSCH is not used for the data transmission based on the DCI scheduling.

If one SPS configuration is determined as transmitting in the non-SBFD symbol according to a provenance of the PDSCH resource, however, if a transmission occasion corresponding to one SPS PDSCH of the one SPS configuration is located in one slot and the PDSCH resource corresponding to the SPS PDSCH is the SBFD symbol in the one slot, the SPS PDSCH is not transmitted in the one slot, and the PDSCH resource corresponding to the SPS PDSCH is not used for the data transmission based on the DCI scheduling.

In one embodiment, the HARQ-ACK generating method further includes the following: when one type-1 HARQ-ACK codebook includes at least one HARQ-ACK for a DL reception based on DCI scheduling, according to the predefined rule, the one type-1 HARQ-ACK codebook is determined to be generated.

In one embodiment, when the first-type resource is configured, determining the one type-1 HARQ-ACK codebook to be generated may include the following: a slot set corresponding to the type-1 HARQ-ACK codebook is determined; for each of first-type slots in the slot set, a HARQ-ACK is generated based on a candidate DL reception resource, and the HARQ-ACK generated for each of the first-type slots is concatenated to acquire a first sub-codebook; for each of second-type slots in the slot set, a HARQ-ACK is generated based on the candidate DL reception resource, and the HARQ-ACK generated for each of the second-type slots is concatenated to acquire a second sub-codebook; and the first sub-codebook and the second sub-codebook are concatenated to obtain the type-1 HARQ-ACK codebook.

In an example, if the UE is configured with the SBFD resource and the type-1 HARQ-ACK codebook, the UE generates a type-1 HARQ-ACK codebook including HARQ-ACK information for PDSCHs scheduled by DCI in the following manner. Based on a slot n in which the type-1 HARQ-ACK codebook is transmitted, one or more slots are determined, i.e., n-kl slots are determined, where k1 is an element of a k1 set containing one or more k1 values, and each k1 value is used to indicate an interval between a slot in which the PDSCH is transmitted and a slot in which the HARQ-ACK corresponding to the PDSCH is transmitted. The k1 set is associated with both the SBFD symbols and the non-SBFD symbols. One or more slots are obtained through the n-k1 slots, and the number of the one or more slots depends on the number of the k1 values. The determined one or more slots are configured as the SBFD slots or the non-SBFD slots based on the SBFD subbands. For each of the SBFD slots, an HARQ-ACK is generated based on a candidate PDSCH resource, and the HARQ-ACK generated for each of the SBFD slots is concatenated to acquire the first subcodebook. For each of the non-SBFD slots, an HARQ-ACK is generated based on the candidate PDSCH resource, and the HARQ-ACK generated for each of the non-SBFD slots is concatenated to acquire the second sub-codebook. The first sub-codebook and the second sub-codebook are concatenated to obtain a final type-1 HARQ-ACK codebook.

In one embodiment, when a same DL reception resource set is configured for a first-type OFDM symbol and a second-type OFDM symbol, candidate DL reception resources for both the first-type slot and the second-type slot refer to DL reception resources included in the same DL reception resource set.

In an example, when the same PDSCH resource set is configured for the SBFD symbols and the non-SBFD symbols, the candidate PDSCH resources in the SBFD slots and in the non-SBFD slots are PDSCH resources included in the PDSCH resource set. In other words, the PDSCH resource set is used to generate the first sub-codebook for the SBFD slots and to generate the second sub-codebook for the non-SBFD slots, respectively.

In one embodiment, when a first-type OFDM symbol and a second-type OFDM symbol are respectively configured with different PDSCH resource sets, for each of the first-type slots, the candidate DL reception resource refers to a DL reception resource in a DL reception resource set corresponding to the first-type OFDM symbol; and for each of the second-type slots, the candidate DL reception resource refers to a DL reception resource in a DL reception resource set corresponding to the second-type OFDM symbol.

In an example, when the SBFD symbol and the non-SBFD symbol are respectively configured with different PDSCH resource sets, the candidate PDSCH resource in the SBFD slot refers to a PDSCH resource in the PDSCH resource set associated with the SBFD symbol, and the candidate PDSCH resource in the non-SBFD slot refers to a PDSCH resource in the PDSCH resource set associated with the non-SBFD symbol. In other words, for the SBFD slot, the PDSCH resource set associated with the SBFD symbol is used to generate the first sub-codebook. For the non-SBFD slot, the PDSCH resource set associated with the non-SBFD symbol is used to generate the second sub-codebook.

In one embodiment, the slot set includes a first slot subset and a second slot subset, the first slot subset is associated with a first-type OFDM symbol, and the second slot subset is associated with a second-type OFDM symbol; for the first slot subset, the first sub-codebook is generated based a slot configured with the first-type OFDM symbol; and for the second slot subset, the second sub-codebook is generated based a slot configured with the second-type OFDM symbol.

In an example, if one k1 set is configured or associated with the SBFD symbol, the other k1 set is configured or associated with the non-SBFD symbol. The k1 set configured or associated with the SBFD symbol may actually contain a slot not configured with the SBFD symbol. A slot configured with the SBFD symbol in the k1 set configured or associated with the SBFD symbol is used to generate the first sub-codebook. A slot not configured with the SBFD symbol in the k1 set configured or associated with the SBFD symbol is not used to generate the first sub-codebook. The other k1 set configured or associated with the non-SBFD symbol may actually contain a slot configured with the SBFD symbol. A slot not configured with the SBFD symbol in the other k1 set is configured or associated with the non-SBFD symbol and is used to generate the second sub-codebook. The slot configured with the SBFD symbol in the other k1 set configured or associated with the SBFD symbol is not used to generate the second sub-codebook.

In one embodiment, when the first-type resource is configured, determining a type-2 HARQ-ACK codebook may include the following: counter downlink assignment indicator (DAI) values in DCIs corresponding to a DL reception transmitted in a first-type OFDM symbol and counter DAI values in DCIs corresponding to a DL reception transmitted in a second-type OFDM symbol are configured to be consecutive, and the type-2 HARQ-ACK codebook is generated based on a sequence of the counter DAI values in the DCIs corresponding to the DL reception transmitted in the first-type OFDM symbol and the counter DAI values in DCIs corresponding to the DL reception transmitted in the second-type OFDM symbol.

In an example, if the UE is configured with the SBFD subband and the type-2 HARQ-ACK codebook, the type-2 HARQ-ACK codebook is generated by the UE in the following manner: counter DAI values in DCIs of PDCCHs corresponding to the PDSCH transmitted in the SBFD symbol and the PDSCH transmitted in the non-SBFD symbol are configured to be consecutive, and the type-2 HARQ-ACK codebook is generated based on the sequence of the counter DAI values. For example, if a PDSCH1 is transmitted in the SBFD symbol by a first DCI scheduling, and a PDSCH2 is transmitted in the non-SBFD symbol by a second DCI scheduling or a DC2 scheduling, the counter DAI values of the first DCI scheduling and the counter DAI values of the second DCI scheduling are configured to be consecutive. In this manner, the HARQ-ACK for the PDSCH1 in the SBFD symbol based on the counter DAI values of the first DCI scheduling and the HARQ-ACK for the PDSCH2 in the non-SBFD symbol based on the counter DAI values of the second DCI scheduling are continuously generated in the type-2 HARQ-ACK codebook.

In the present embodiment, total DAI values in the DCI of the PDCCH corresponding to the PDSCH transmitted in the SBFD symbol may obtained by accumulating PDSCHs received in the non-SBFD symbol and PDSCHs received in the SBFD symbol. Total DAI values in the DCI of the PDCCH corresponding to the PDSCH transmitted in the non-SBFD symbol may also be obtained by accumulating PDSCHs received in the non-SBFD symbol and PDSCHs received in the SBFD symbol.

In one embodiment, when the first-type resource is configured, determining a type-2 HARQ-ACK codebook may include the following: only counter DAI values in DCIs corresponding to a DL reception transmitted in a first-type OFDM symbol are configured to be consecutive, and a third sub-codebook is generated based on a sequence of the counter DAI values in the DCIs corresponding to the DL reception transmitted in the first-type OFDM symbol; only counter DAI values in DCIs corresponding to a DL reception transmitted in a second-type OFDM symbol are configured to be consecutive, and a fourth sub-codebook is generated based on a sequence of the counter DAI values in the DCIs corresponding to the DL reception transmitted in the second-type OFDM symbol; and the third sub-codebook and the fourth sub-codebook are concatenated to obtain the type-2 HARQ-ACK codebook.

In one embodiment, when a HARQ-ACK for a DL reception including the SPS configuration is configured to multiplex with the type-2 HARQ-ACK codebook, the HARQ-ACK for the DL reception including the SPS configuration is concatenated at an end of the type-2 HARQ-ACK codebook to obtain a final type-2 HARQ-ACK codebook. The HARQ-ACK for the DL reception including the SPS configuration is determined to be generated.

In an example, if the HARQ-ACK for the SPS PDSCH including the SPS configuration is configured to multiplex with the type-2 HARQ-ACK codebook, whether to generate the HARQ-ACK for the SPS PDSCH including the SPS configuration is determined according to the above Rule 1 to Rule 21. If the HARQ-ACK for the SPS PDSCH including the SPS configuration is determined to be generated, the HARQ-ACK is concatenated at the end of the type-2 HARQ-ACK codebook to obtain the final type-2 HARQ-ACK codebook.

According to the technical solution of the embodiments of the present disclosure, at least one of first information, second information, or third information is received. According to a predefined rule, a HARQ-ACK for a DL reception is determined based on information acquired from at least one of the first information, the second information, or the third information. Therefore, the diversity of HARQ-ACK generation can be improved, and various situations can be appliable.

FIG. 12 is a flowchart of a HARQ-ACK receiving method according to an embodiment of the present disclosure. The HARQ-ACK receiving method may be executed by a base station. As shown in FIG. 12, the HARQ-ACK receiving method includes the following:
In S210, at least one of first information, second information, or third information is transmitted.

In S220, according to a predefined rule, a HARQ-ACK for a DL reception is received based on information acquired from at least one of the first information, the second information, or the third information.

The DL reception includes at least one of of the following: an SPS configuration, a PDSCH scheduled based on DCI, a PDSCH with repetitions, multiple PDSCHs scheduled by a single DCI, a periodic or semi-persistent CSI-RS, or a periodic PDCCH; the information acquired from the first information includes at least one of the following: a location of an OFDM symbol of the DL reception, a location of a frequency domain resource of the DL reception, or a location of a slot of the DL reception; the information acquired from the second information includes at least one of the following: a location of a first-type OFDM symbol, a location of a first-type slot, or a location of a first-type resource; and the information acquired from the third information includes at least one of the following: a transmission mode of the DL reception.

In one embodiment, receiving the HARQ-ACK for the DL reception based on the information acquired from the at least one of the first information, the second information, or the third information may include the following: when HARQ-ACKs for DL receptions corresponding to one or more activated DL reception configurations are to be multiplexed into a HARQ-ACK codebook, according to the predefined rule, the HARQ-ACKs for the DL receptions are received. The DL reception includes the SPS configuration.

For this method, reference may be made to the method of Rule 1 to Rule 21 in the above embodiments, which will not be repeated here.

In one embodiment, receiving the HARQ-ACK for the DL reception based on the information acquired from the at least one of the first information, the second information, or the third information may include the following: when one type-1 HARQ-ACK codebook includes at least one HARQ-ACK for a DL reception based on DCI scheduling, according to the predefined rule, the one type-1 HARQ-ACK codebook is received.

For this method, reference may be made to the method for generating the type-1 HARQ-ACK codebook in the above embodiments, which will not be repeated here.

In one embodiment, receiving the HARQ-ACK for the DL reception based on the information acquired from the at least one of the first information, the second information, or the third information may include the following: when the first-type resource is configured, and counter DAI values in DCIs corresponding to a DL reception transmitted in a first-type OFDM symbol and counter DAI values in DCIs corresponding to a DL reception transmitted in a second-type OFDM symbol are configured to be consecutive, the type-2 HARQ-ACK generated based on a sequence of the counter DAI values is received.

For this method, reference may be made to the method for generating the type-2 HARQ-ACK codebook in the above embodiments, which will not be repeated here.

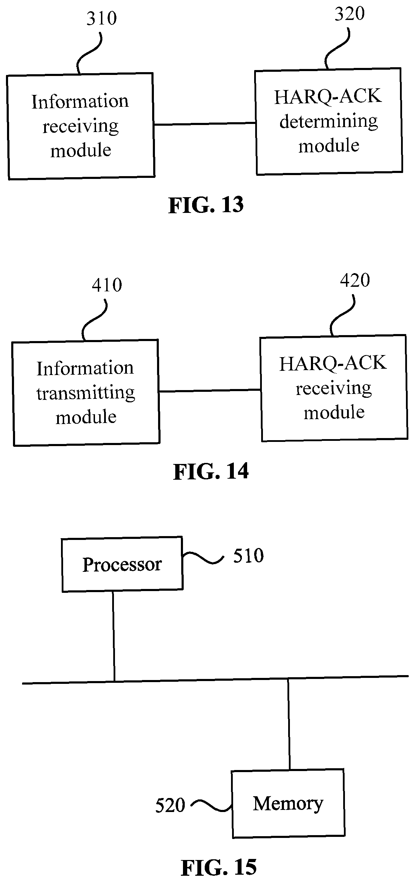

FIG. 13 is a schematic structural diagram of a HARQ-ACK generating apparatus according to an embodiment of the present disclosure. The HARQ-ACK generating apparatus is applied to a UE side. As shown in FIG. 13, the HARQ-ACK generating apparatus includes an information receiving module 310 and a HARQ-ACK determining module 320.

The information receiving module 310 is configured to receive at least one of first information, second information, or a third information.

The HARQ-ACK determining module 320 is configured to determine, according to a predefined rule, a HARQ-ACK for a DL reception based on information acquired from at least one of the first information, the second information, or the third information.

The DL reception includes at least one of of the following: an SPS configuration, a PDSCH scheduled based on DCI, a PDSCH with repetitions, multiple PDSCHs scheduled by a single DCI, a periodic or semi-persistent CSI-RS, or a periodic PDCCH; the information acquired from the first information includes at least one of the following: a location of an OFDM symbol of the DL reception, a location of a frequency domain resource of the DL reception, or a location of a slot of the DL reception; the information acquired from the second information includes at least one of the following: a location of a first-type OFDM symbol, a location of a first-type slot, or a location of a first-type resource; and the information acquired from the third information includes at least one of the following: a transmission mode of the DL reception.

Optionally, the HARQ-ACK determining module 320 is further configured to implement the following:
When HARQ-ACKs for DL receptions corresponding to one or more activated DL reception configurations are to be multiplexed into a HARQ-ACK codebook, according to the predefined rule, the HARQ-ACK for the DL reception is determined. The DL reception includes the SPS configuration.

Optionally, the HARQ-ACK determining module 320 is further configured to implement at least one of the following:
When one DL reception configuration is configured with a transmission mode of transmitting only in a first-type OFDM symbol, and a symbol corresponding to a DL reception corresponding to the one DL reception configuration in a slot is determined as a second-type OFDM symbol, the HARQ-ACK for the DL reception is not generated.

When one DL reception configuration is configured with a transmission mode of transmitting only in a second-type OFDM symbol, and a symbol corresponding to a DL reception corresponding to the one DL reception configuration in a slot is determined as a first-type OFDM symbol, the HARQ-ACK for the DL reception is not generated.

When one DL reception configuration is configured with a transmission mode that different DL receptions corresponding to the one DL reception configuration are transmitted in a first-type OFDM symbol and a second-type OFDM symbol in different slots, and symbols corresponding to the different DL receptions corresponding to the one DL reception configuration in a slot are determined as the first-type OFDM symbol and the second-type OFDM symbol, the HARQ-ACK for the DL reception is not generated.

Optionally, the HARQ-ACK determining module 320 is further configured to implement at least one of the following:
When a DL reception corresponding to one activated DL reception configuration is configured to be received in a slot m, and a symbol type of at least one symbol of the DL reception in the slot m is different from a symbol type associated with the one activated DL reception configuration, the HARQ-ACK for the DL reception is not generated.

When a DL reception corresponding to one activated DL reception configuration is configured to be received in a slot m, and a symbol type of all symbols of the DL reception in the slot m is different from a symbol type associated with the one activated DL reception configuration, the HARQ-ACK for the DL reception is not generated.

When a DL reception corresponding to one activated DL reception configuration is configured to be received in a slot m, and a symbol type of all symbols of the DL reception in the slot m is the same as a symbol type associated with the one activated DL reception configuration, the HARQ-ACK for the DL reception is generated.

When a DL reception corresponding to one activated DL reception configuration is configured to be received in a slot m, and a symbol type of at least two symbols of the DL reception in the slot m is the same as a symbol type associated with the one activated DL reception configuration, the HARQ-ACK for the DL reception is generated.

When a DL reception corresponding to one activated DL reception configuration is configured to be received in a slot m, and a symbol type of symbols with a ratio more than a set ratio of the DL reception in the slot m is different from a symbol type associated with the one activated DL reception configuration, the HARQ-ACK for the DL reception is not generated.

Optionally, the HARQ-ACK determining module 320 is further configured to implement the following:
In response to a DL reception with repeated transmission corresponding to one activated DL reception configuration, according to the predefined rule, the HARQ-ACK for the DL reception with repeated transmission is determined.

Optionally, the HARQ-ACK determining module 320 is further configured to implement one of the following:

When the DL reception corresponding to one activated DL reception configuration is configured to be received in slots from the slot m to a slot m-R+1, according to the predefined rule, whether to generate the HARQ-ACK for the DL reception is determined only in one or more slots except the slot m-R+1, where R is a number of retransmissions.

When the DL reception corresponding to one activated DL reception configuration is configured to be received in slots from the slot m to a slot m-R+1, according to the predefined rule, whether to generate the HARQ-ACK for the DL reception is always determined in the slot m-R+1.

When the DL reception corresponding to one activated DL reception configuration is configured to be received in slots from the slot m to a slot m-R+1, according to the predefined rule, the DL reception for the DL reception is determined in R slots one by one. When it is determined to generate the HARQ-ACK for the DL reception in one of the R slots, the HARQ-ACK for the DL reception is generated. When it is determined not to generate the HARQ-ACK for the DL reception in any of the R slots, the HARQ-ACK for the DL reception is not generated.

When the DL reception corresponding to one activated DL reception configuration is configured to be received in slots from the slot m to a slot m-R+1, according to the predefined rule, the DL reception for the DL reception is determined in R slots one by one. When it is determined not to generate the HARQ-ACK for the DL reception in one of the R slots, the HARQ-ACK for the DL reception is not generated. When it is determined to generate the HARQ-ACK for the DL reception in each of the R slots, the HARQ-ACK for the DL reception is generated.

Optionally, the HARQ-ACK determining module 320 is further configured to implement at least one of the following:
When a resource of a DL reception corresponding to one DL reception configuration in one slot fully overlaps a resource of an UL subband in the first-type OFDM symbol, the HARQ-ACK for the DL reception in the one slot is not generated.

When a resource of a DL reception corresponding to one DL reception configuration in one slot is located within a resource of an UL subband in the first-type OFDM symbol, the HARQ-ACK for the DL reception in the one slot is not generated.

When a resource of the DL reception corresponding to one DL reception configuration in one slot partially overlaps a resource of an UL subband in the first-type OFDM symbol, the HARQ-ACK for the DL reception in the one slot is not generated.

Optionally, the HARQ-ACK determining module 320 is further configured to implement at least one of the following:
When a DL reception corresponding to one activated DL reception configuration is configured to be received in a slot m, and a resource of the DL reception in the slot m fully overlaps the resource of the UL subband in the first-type OFDM symbol, the HARQ-ACK for the DL reception in the slot m is generated.

When a DL reception corresponding to one activated DL reception configuration is configured to be received in a slot m, and a resource of the DL reception in the slot m is located within the resource of the UL subband in the first-type OFDM symbol, not generating the HARQ-ACK for the DL reception in the slot m is generated.

When a DL reception corresponding to one activated DL reception configuration is configured to be received in a slot m, and a resource of the DL reception in the slot m partially overlaps the resource of the UL subband in the first-type OFDM symbol, the HARQ-ACK for the DL reception in the slot m is generated.

Optionally, the HARQ-ACK determining module 320 is further configured to implement the following:
In response to a DL reception with repeated transmission corresponding to one activated DL reception configuration, according to the predefined rule, the HARQ-ACK for the DL reception with repeated transmission is determined.

Optionally, the HARQ-ACK determining module 320 is further configured to implement at least one of the following:

When the DL reception corresponding to one activated DL reception configuration is configured to be received in slots from the slot m to a slot m-R+1, according to the predefined rule, whether to generate the HARQ-ACK for the DL reception is determined only in one or more slots except the slot m-R+1. Where R is a number of retransmissions.

When the DL reception corresponding to one activated DL reception configuration is configured to be received in slots from the slot m to a slot m-R+1, according to the predefined rule, whether to generate the HARQ-ACK for the DL reception is always determined in the slot m-R+1.

When the DL reception corresponding to one activated DL reception configuration is configured to be received in slots from the slot m to a slot m-R+1, according to the predefined rule, the DL reception for the DL reception is determined in R slots one by one. When it is determined to generate the HARQ-ACK for the DL reception in one of the R slots, the HARQ-ACK for the DL reception is generated. When it is determined not to generate the HARQ-ACK for the DL reception in any of the R slots, the HARQ-ACK for the DL reception is not generated.

When the DL reception corresponding to one activated DL reception configuration is configured to be received in slots from the slot m to a slot m-R+1, according to the predefined rule, the DL reception for the DL reception is determined in R slots one by one. When it is determined not to generate the HARQ-ACK for the DL reception in one of the R slots, the HARQ-ACK for the DL reception is not generated. When it is determined to generate the HARQ-ACK for the DL reception in each of the R slots, the HARQ-ACK for the DL reception is generated.

Optionally, the HARQ-ACK generating apparatus further includes a first-type resource usage manner determining module. The first-type resource usage manner determining module is configured to implement the following:
When one DL reception configuration is configured as performing DL reception based on a transmission mode, and when a symbol type of a symbol of one DL reception corresponding to the one DL reception configuration is different from a symbol type associated with the one DL reception configuration and the one DL reception corresponding to the one DL reception configuration is not transmitted in one slot, according to the predefined rule, a usage manner of a resource of the one DL reception corresponding to the one DL reception configuration in the one slot is determined.

Optionally, the first-type resource usage manner determining module is further configured to implement the following:
When a symbol type of a symbol of one DL reception corresponding to the one DL reception configuration is different from a symbol type associated with the one DL reception configuration and the one DL reception corresponding to the one DL reception configuration is not transmitted in one slot, the resource of the one DL reception corresponding to the one DL reception is used for a data transmission based on a DCI scheduling, or the resource of the one DL reception corresponding to the one DL reception is not used for a data transmission based on a DCI scheduling.

Optionally, the HARQ-ACK generating apparatus further includes a transmission mode determining module. The transmission mode determining module is configured to implement the following:
When the first-type OFDM symbol or the second-type OFDM symbol is separately configured with a DL reception resource set, a transmission mode configured for a DL reception configuration is determined.

Optionally, the transmission mode determining module is further configured to implement at least one of the following:
When a DL reception corresponding to the DL reception configuration is configured with a resource from a DL reception resource set corresponding to the first-type OFDM symbol, the transmission mode configured for the DL reception configuration is determined as transmitting only in the first-type OFDM symbol.

When a DL reception corresponding to the DL reception configuration is configured with a resource from a DL reception resource set corresponding to the second-type OFDM symbol, the transmission mode configured for the DL reception configuration is determined as transmitting only in the second-type OFDM symbol.

When a DL reception corresponding to the DL reception configuration is configured with two resources respectively from a DL reception resource set corresponding to the first-type OFDM symbol and a DL reception resource set corresponding to the second-type OFDM symbol, the transmission mode configured for the DL reception configuration is determined as that different DL receptions corresponding to the DL reception configuration are transmitted in the first-type OFDM symbol and the second-type OFDM symbol in different slots.

Optionally, the HARQ-ACK generating apparatus further includes a second-type resource usage manner determining module. The second-type resource usage manner determining module is configured to implement at least one of the following:

When the transmission mode configured for the DL reception configuration is determined as transmitting only in the first-type OFDM symbol, the DL reception corresponding to the DL reception configuration is in one slot, and the resource configured for the DL reception corresponding to the DL reception configuration is a second-type OFDM symbol in the one slot, the DL reception corresponding to the DL reception configuration is not transmitted in the one slot, and the resource configured for the DL reception corresponding to the DL reception configuration is not used for a data transmission based on a DCI scheduling.

When the transmission mode configured for the DL reception configuration is determined as transmitting only in the second-type OFDM symbol, the DL reception corresponding to the DL reception configuration is in one slot, and the resource configured for the DL reception corresponding to the DL reception is a first-type OFDM symbol in the one slot, the DL reception corresponding to the DL reception configuration is not transmitted in the one slot, and the resource configured for the DL reception corresponding to the DL reception configuration is not used for a data transmission based on a DCI scheduling.

Optionally, the HARQ-ACK generating apparatus further includes a type-1 HARQ-ACK codebook generating module. The type-1 HARQ-ACK codebook generating module is configured to implement the following:
When one type-1 HARQ-ACK codebook includes at least one HARQ-ACK for a DL reception based on DCI scheduling, according to the predefined rule, the one type-1 HARQ-ACK codebook is determined to be generated.

Optionally, the type-1 HARQ-ACK codebook generating module is configured to implement the following:
A slot set corresponding to the type-1 HARQ-ACK codebook is determined.

For each of first-type slots in the slot set, a HARQ-ACK is generated based on a candidate DL reception resource, and the HARQ-ACK generated for each of the first-type slots is concatenated to acquire a first sub-codebook.

For each of second-type slots in the slot set, a HARQ-ACK is generated based on the candidate DL reception resource, and the HARQ-ACK generated for each of the second-type slots is concatenated to acquire a second sub-codebook.

The first sub-codebook and the second sub-codebook are concatenated to obtain the type-1 HARQ-ACK codebook.

Optionally, the type-1 HARQ-ACK codebook generating module is further configured to implement the following:
When a first-type OFDM symbol and a second-type OFDM symbol are configured with a same DL reception resource set, for each of the first-type slots and each of the second-type slots, the candidate DL reception resource refers to a DL reception resource in the same DL reception resource set.

Optionally, the type-1 HARQ-ACK codebook generating module is further configured to implement the following:
When a first-type OFDM symbol and a second-type OFDM symbol are respectively configured with different PDSCH resource sets, for each of the first-type slots, the candidate DL reception resource refers to a DL reception resource in a DL reception resource set corresponding to the first-type OFDM symbol.

For each of the second-type slots, the candidate DL reception resource refers to a DL reception resource in a DL reception resource set corresponding to the second-type OFDM symbol.

Optionally, the slot set includes a first slot subset and a second slot subset, the first slot subset is associated with a first-type OFDM symbol, and the second slot subset is associated with a second-type OFDM symbol. The type-1 HARQ-ACK codebook generating module is further configured to implement the following:
For the first slot subset, the first sub-codebook is generated based a slot configured with the first-type OFDM symbol.

For the second slot subset, the second sub-codebook is generated based a slot configured with the second-type OFDM symbol.

Optionally, the HARQ-ACK generating apparatus further includes a type-2 HARQ-ACK codebook generating module. When the first-type resource is configured, the type-2 HARQ-ACK codebook generating module is configured to implement the following:

Counter DAI values in DCIs corresponding to a DL reception transmitted in a first-type OFDM symbol and counter DAI values in DCIs corresponding to a DL reception transmitted in a second-type OFDM symbol is configured to be consecutive, and the type-2 HARQ-ACK codebook is generated based on a sequence of the counter DAI values in the DCIs corresponding to the DL reception transmitted in the first-type OFDM symbol and the counter DAI values in DCIs corresponding to the DL reception transmitted in the second-type OFDM symbol.

Optionally, when the first-type resource is configured, the type-2 HARQ-ACK codebook generating module is further configured to implement the following:
Only counter DAI values in DCIs corresponding to a DL reception transmitted in a first-type OFDM symbol are configured to be consecutive, and a third sub-codebook is generated based on a sequence of the counter DAI values in the DCIs corresponding to the DL reception transmitted in the first-type OFDM symbol.

Only counter DAI values in DCIs corresponding to a DL reception transmitted in a second-type OFDM symbol are configured to be consecutive, and a fourth sub-codebook is generated based on a sequence of the counter DAI values in the DCIs corresponding to the DL reception transmitted in the second-type OFDM symbol.

The third sub-codebook and the fourth sub-codebook are concatenated to obtain the type-2 HARQ-ACK codebook.

Optionally, the type-2 HARQ-ACK codebook generating module is further configured to implement the following: when a HARQ-ACK for a DL reception including the SPS configuration is configured to multiplex with the type-2 HARQ-ACK codebook, the HARQ-ACK for the DL reception including the SPS configuration is concatenated at an end of the type-2 HARQ-ACK codebook to obtain a final type-2 HARQ-ACK codebook. The HARQ-ACK for the DL reception including the SPS configuration is determined to be generated.

Optionally, the first-type resource includes an SBFD subband or a CCFD subband, the SBFD subband or the CCFD subband is configured in a DL OFDM symbol or a flexible OFDM symbol, and the SBFD subband includes a UL subband and a DL subband.

The first-type OFDM symbol refers to an OFDM symbol configured with the first-type resource, and the second-type OFDM symbol refers to an OFDM symbol not configured with the first-type resource.

The first-type slot includes a slot configured with the first-type OFDM symbol, and a second-type slot includes a slot not configured with the first-type OFDM symbol.

In one embodiment, FIG. 14 is a schematic structural diagram of a HARQ-ACK receiving apparatus according to an embodiment of the present disclosure. The HARQ-ACK receiving apparatus is applied to a base station side. As shown in FIG. 14, the HARQ-ACK receiving apparatus includes an information transmitting module 410 and a HARQ-ACK receiving module 420.

The information transmitting module 410 is configured to transmit at least one of first information, second information, or third information.

The HARQ-ACK receiving module 420 is configured to receive, according to a predefined rule, a HARQ-ACK for a DL reception based on information acquired from at least one of the first information, the second information, or the third information.

The DL reception includes at least one of the following: an SPS configuration, a PDSCH scheduled based on DCI, a PDSCH with repetitions, multiple PDSCHs scheduled by a single DCI, a periodic or semi-persistent CSI-RS, or a periodic PDCCH; the information acquired from the first information includes at least one of the following: a location of an OFDM symbol of the DL reception, a location of a frequency domain resource of the DL reception, or a location of a slot of the DL reception; the information acquired from the second information includes at least one of the following: a location of a first-type OFDM symbol, a location of a first-type slot, or a location of a first-type resource; and the information acquired from the third information includes at least one of the following: a transmission mode of the DL reception.

Optionally, the HARQ-ACK receiving module 420 is further configured to implement the following:
When HARQ-ACKs for DL receptions corresponding to one or more activated DL reception configurations are to be multiplexed into a HARQ-ACK codebook, according to the predefined rule, the HARQ-ACKs for the DL receptions are received. The DL reception includes the SPS configuration.

Optionally, the HARQ-ACK receiving module 420 is further configured to implement the following:
When one type-1 HARQ-ACK codebook includes at least one HARQ-ACK for a DL reception based on DCI scheduling, according to the predefined rule, the one type-1 HARQ-ACK codebook is received.

Optionally, the HARQ-ACK receiving module 420 is further configured to implement the following:
When the first-type resource is configured, and counter DAI values in DCIs corresponding to a DL reception transmitted in a first-type OFDM symbol and counter DAI values in DCIs corresponding to a DL reception transmitted in a second-type OFDM symbol are configured to be consecutive, the type-2 HARQ-ACK generated based on a sequence of the counter DAI values is received.

In one embodiment, FIG. 15 is a schematic structural diagram of a computer device according to an embodiment of the present disclosure. As shown in FIG. 15, the device according to the present disclosure includes a processor 510 and a memory 520. The device may include one of more processors 510, and one processor 510 is taken as an example in FIG. 15. The device may include one of more memories 520, and one memory 520 is taken as an example in FIG. 15. The processor 510 and the memory 520 in the device may be connected via a bus or other means. FIG. 15 shows an example of connection via a bus. In the present embodiment, the device is a computer device.

The memory 520, as a computer-readable storage medium, may be configured to store a software program, a computer-executable program and a module, such as a program instruction or a module corresponding to the device in any embodiment of the present disclosure (e.g., the information receiving module and the HARQ-ACK determining module in the HARQ-ACK generating apparatus). The memory 520 may include a program storage region and a data storage region. The program storage region may store an operating system and an application program required by at least one function. The data storage region may store data created depending on the purpose of a device. Additionally, the memory 520 may include a high-speed random-access memory and may further include a non-volatile memory, for example, at least one magnetic disk memory and flash memory or other non-volatile solid-state memories. In some examples, the memory 520 may further include memories remotely disposed with respect to the processor 510. These remote memories may be connected to the device via a network. Examples of the preceding network include, but are not limited to, the Internet, an intranet, a local area network, a communication network and a combination thereof.

The device provided above may be configured to execute the HARQ-ACK generating method or the HARQ-ACK receiving method according to any of the above embodiments, and has corresponding functions and effects.

The program stored in the corresponding memory 520 may be a program instruction or a module for the HARQ-ACK generating method or the HARQ-ACK receiving method according to the embodiments of the present disclosure. The processor 510 executes one or more functional applications and data processing of the computer device by running the software program, the instruction and the module stored in the memory 520, i.e., the HARQ-ACK generating method or the HARQ-ACK receiving method in the above method embodiments is implemented. It can be understood that when the device is a receiving end, the HARQ-ACK generating method or the HARQ-ACK receiving method according to any embodiment of the present disclosure can be executed, and has corresponding functions and effects.

The embodiments of the present disclosure also provide a storage medium containing a computer-executable instruction, which, when executed by a processor, is configured to execute a HARQ-ACK generating method or a HARQ-ACK receiving method. The method includes the following: at least one of first information, second information, or third information is received; according to a predefined rule, a HARQ-ACK for a DL reception is determined based on information acquired from at least one of the first information, the second information, or the third information. Alternatively, the method includes the following: at least one of first information, second information, or third information is transmitted; according to a predefined rule, a HARQ-ACK for a DL reception is received based on information acquired from at least one of the first information, the second information, or the third information.

It is to be understood by those skilled in the art that the term device covers any suitable type of wireless user equipment, for example, a mobile phone, a portable data processing apparatus, a portable web browser, or a vehicle-mounted mobile station.

In general, multiple embodiments of the present disclosure may be implemented in hardware or special-purpose circuits, software, logic, or any combination thereof. For example, some aspects may be implemented in hardware while other aspects may be implemented in firmware or software that may be executed by a controller, a microprocessor, or another computing apparatus, though the present disclosure is not limited thereto.

The embodiments of the present disclosure may be implemented by computer program instructions executed by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present disclosure may represent program steps, may represent interconnected logic circuits, modules, and functions or may represent a combination of program steps with logic circuits, modules, and functions. A computer program may be stored in a memory. The memory may be of any type suitable for a local technical environment and may be implemented using any suitable data storage technology. The memory may be, for example, but not limited to, a read-only memory (ROM), a random-access memory (RAM), an optical storage apparatus and system (digital video disc (DVD) or compact disc (CD)) or the like. Computer-readable media may include non-transitory storage media. The data processor may be of any type suitable for the local technical environment, such as, but not limited to, a general-purpose computer, a special-purpose computer, a microprocessor, a digital signal processor (DSP), an application specific integrated circuit (ASIC), a field-programmable gate array (FPGA) and a processor based on a multi-core processor architecture.

The foregoing description merely shows the illustrative embodiments of the present disclosure, and is not intended to limit the scope of the present disclosure.

The embodiments of the present disclosure may be implemented by computer program instructions executed by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

By way of exemplary and non-limiting examples, a detailed description of the exemplary embodiments of the present disclosure has been provided above. However, various modifications and adaptations to the above embodiments are obvious to those skilled in the art in view of the drawings and the claims, without departing from the scope of the present disclosure. Accordingly, the proper scope of the present disclosure is determined according to the claims.

## Claims

1. A hybrid automatic repeat request (HARQ)- acknowledgment (ACK) generating method, comprising:
receiving at least one of first information, second information, or third information;
determining, according to a predefined rule, a HARQ-ACK for a downlink (DL) reception based on information acquired from at least one of the first information, the second information, or the third information;
wherein the DL reception comprises at least one of the following: a semi-persistent scheduling (SPS) configuration, a physical downlink shared channel (PDSCH) scheduled based on downlink control information (DCI), a PDSCH with repetitions, a plurality of PDSCHs scheduled by a single DCI, a periodic or semi-persistent channel state information reference signal (CSI-RS), or a periodic physical downlink control channel (PDCCH);
the information acquired from the first information comprises at least one of the following: a location of an orthogonal frequency division multiplexing (OFDM) symbol of the DL reception, a location of a frequency domain resource of the DL reception, or a location of a slot of the DL reception;
the information acquired from the second information comprises at least one of the following: a location of a first-type OFDM symbol, a location of a first-type slot, or a location of a first-type resource; and
the information acquired from the third information comprises at least one of the following: a transmission mode of the DL reception.

2. The HARQ-ACK generating method according to claim 1, wherein determining, according to the predefined rule, the HARQ-ACK for the DL reception based on the information acquired from the at least one of the first information, the second information, or the third information comprises: in response to HARQ-ACKs for DL receptions corresponding to one or more activated DL reception configurations to be multiplexed into a HARQ-ACK codebook, determining, according to the predefined rule, the HARQ-ACK for the DL reception, wherein the DL reception comprises the SPS configuration.

3. The HARQ-ACK generating method according to claim 2, wherein determining, according to the predefined rule, the HARQ-ACK for the DL reception comprises at least one of the following:
in response to one DL reception configuration being configured with a transmission mode of transmitting only in a first-type OFDM symbol, and a symbol corresponding to a DL reception corresponding to the one DL reception configuration in a slot being determined as a second-type OFDM symbol, not generating the HARQ-ACK for the DL reception;
in response to one DL reception configuration being configured with a transmission mode of transmitting only in a second-type OFDM symbol, and a symbol corresponding to a DL reception corresponding to the one DL reception configuration in a slot being determined as a first-type OFDM symbol, not generating the HARQ-ACK for the DL reception; or
in response to one DL reception configuration being configured with a transmission mode that different DL receptions corresponding to the one DL reception configuration are transmitted in a first-type OFDM symbol and a second-type OFDM symbol in different slots, and symbols corresponding to the different DL receptions corresponding to the one DL reception configuration in a slot being determined as the first-type OFDM symbol and the second-type OFDM symbol, not generating the HARQ-ACK for the DL reception.

4. The HARQ-ACK generating method according to claim 2, wherein determining, according to the predefined rule, the HARQ-ACK for the DL reception comprises at least one of the following:
in response to a DL reception corresponding to one activated DL reception configuration being configured to be received in a slot m, and a symbol type of at least one symbol of the DL reception in the slot m being different from a symbol type associated with the one activated DL reception configuration, not generating the HARQ-ACK for the DL reception;
in response to a DL reception corresponding to one activated DL reception configuration being configured to be received in a slot m, and a symbol type of all symbols of the DL reception in the slot m being different from a symbol type associated with the one activated DL reception configuration, not generating the HARQ-ACK for the DL reception;
in response to a DL reception corresponding to one activated DL reception configuration being configured to be received in a slot m, and a symbol type of all symbols of the DL reception in the slot m being the same as a symbol type associated with the one activated DL reception configuration, generating the HARQ-ACK for the DL reception;
in response to a DL reception corresponding to one activated DL reception configuration being configured to be received in a slot m, and a symbol type of at least two symbols of the DL reception in the slot m being the same as a symbol type associated with the one activated DL reception configuration, generating the HARQ-ACK for the DL reception; or
in response to a DL reception corresponding to one activated DL reception configuration being configured to be received in a slot m, and a symbol type of symbols with a ratio more than a set ratio of the DL reception in the slot m being different from a symbol type associated with the one activated DL reception configuration, not generating the HARQ-ACK for the DL reception.

5. The HARQ-ACK generating method according to claim 4, wherein determining, according to the predefined rule, the HARQ-ACK for the DL reception comprises:
in response to a DL reception with repeated transmission corresponding to one activated DL reception configuration, determining, according to the predefined rule, the HARQ-ACK for the DL reception with repeated transmission.

6. The HARQ-ACK generating method according to claim 5, wherein determining, according to the predefined rule, the HARQ-ACK for the DL reception with repeated transmission comprises at least one of the following:
in response to the DL reception corresponding to one activated DL reception configuration being configured to be received in slots from the slot m to a slot m-R+1, determining, according to the predefined rule, whether to generate the HARQ-ACK for the DL reception only in one or more slots except the slot m-R+1, wherein R is a number of retransmissions;
in response to the DL reception corresponding to one activated DL reception configuration being configured to be received in slots from the slot m to a slot m-R+1, always determining, according to the predefined rule, whether to generate the HARQ-ACK for the DL reception in the slot m-R+1;
in response to the DL reception corresponding to one activated DL reception configuration being configured to be received in slots from the slot m to a slot m-R+1, determining, according to the predefined rule, the DL reception for the DL reception in R slots one by one, wherein in response to determining to generate the HARQ-ACK for the DL reception in one of the R slots, the HARQ-ACK for the DL reception is generated, and in response to determining not to generate the HARQ-ACK for the DL reception in any of the R slots, the HARQ-ACK for the DL reception is not generated; or
in response to the DL reception corresponding to one activated DL reception configuration being configured to be received in slots from the slot m to a slot m-R+1, determining, according to the predefined rule, the DL reception for the DL reception in R slots one by one, wherein in response to determining not to generate the HARQ-ACK for the DL reception in one of the R slots, the HARQ-ACK for the DL reception is not generated, and in response to determining to generate the HARQ-ACK for the DL reception in each of the R slots, the HARQ-ACK for the DL reception is generated.

7. The HARQ-ACK generating method according to claim 2, wherein determining, according to the predefined rule, the HARQ-ACK for the DL reception comprises at least one of the following:
in response to a resource of a DL reception corresponding to one DL reception configuration in one slot fully overlapping a resource of an uplink (UL) subband in the first-type OFDM symbol, not generating the HARQ-ACK for the DL reception in the one slot;
in response to a resource of a DL reception corresponding to one DL reception configuration in one slot being located within a resource of an UL subband in the first-type OFDM symbol, not generating the HARQ-ACK for the DL reception in the one slot; or,
in response to a resource of the DL reception corresponding to one DL reception configuration in one slot partially overlapping a resource of an UL subband in the first-type OFDM symbol, not generating the HARQ-ACK for the DL reception in the one slot.

8. The HARQ-ACK generating method according to claim 2, wherein determining, according to the predefined rule, the HARQ-ACK for the DL reception comprises at least one of the following:
in response to a DL reception corresponding to one activated DL reception configuration being configured to be received in a slot m, and a resource of the DL reception in the slot m fully overlapping the resource of the UL subband in the first-type OFDM symbol, generating the HARQ-ACK for the DL reception in the slot m;
in response to a DL reception corresponding to one activated DL reception configuration being configured to be received in a slot m, and a resource of the DL reception in the slot m being located within the resource of the UL subband in the first-type OFDM symbol, generating the HARQ-ACK for the DL reception in the slot m; or
in response to a DL reception corresponding to one activated DL reception configuration being configured to be received in a slot m, and a resource of the DL reception in the slot m partially overlapping the resource of the UL subband in the first-type OFDM symbol, generating the HARQ-ACK for the DL reception in the slot m.

9. The HARQ-ACK generating method according to claim 8, wherein determining, according to the predefined rule, the HARQ-ACK for the DL reception comprises:
in response to a DL reception with repeated transmission corresponding to one activated DL reception configuration, determining, according to the predefined rule, the HARQ-ACK for the DL reception with repeated transmission.

10. The HARQ-ACK generating method according to claim 9, wherein determining, according to the predefined rule, the HARQ-ACK for the DL reception with repeated transmission comprises:
in response to the DL reception corresponding to one activated DL reception configuration being configured to be received in slots from the slot m to a slot m-R+1, determining, according to the predefined rule, whether to generate the HARQ-ACK for the DL reception only in one or more slots except the slot m-R+1, wherein R is a number of retransmissions;
in response to the DL reception corresponding to one activated DL reception configuration being configured to be received in slots from the slot m to a slot m-R+1, always determining, according to the predefined rule, whether to generate the HARQ-ACK for the DL reception in the slot m-R+1;
in response to the DL reception corresponding to one activated DL reception configuration being configured to be received in slots from the slot m to a slot m-R+1, determining, according to the predefined rule, the DL reception for the DL reception in R slots one by one, wherein in response to determining to generate the HARQ-ACK for the DL reception in one of the R slots, the HARQ-ACK for the DL reception is generated, and in response to determining not to generate the HARQ-ACK for the DL reception in any of the R slots, the HARQ-ACK for the DL reception is not generated; or
in response to the DL reception corresponding to one activated DL reception configuration being configured to be received in slots from the slot m to a slot m-R+1, determining, according to the predefined rule, the DL reception for the DL reception in R slots one by one, wherein in response to determining not to generate the HARQ-ACK for the DL reception in one of the R slots, the HARQ-ACK for the DL reception is not generated, and in response to determining to generate the HARQ-ACK for the DL reception in each of the R slots, the HARQ-ACK for the DL reception is generated the predefined rulethe predefined rulethe predefined rulethe predefined rule.

11. The HARQ-ACK generating method according to claim 1, further comprising:
in response to one DL reception configuration being configured as performing DL reception based on a transmission mode, and in response to a symbol type of a symbol of one DL reception corresponding to the one DL reception configuration being different from a symbol type associated with the one DL reception configuration and the one DL reception corresponding to the one DL reception configuration being not transmitted in one slot, determining, according to the predefined rule, a usage manner of a resource of the one DL reception corresponding to the one DL reception configuration in the one slot.

12. The HARQ-ACK generating method according to claim 11, wherein determining, according to the predefined rule, the usage manner of the resource of the one DL reception corresponding to the one DL reception configuration in the one slot comprises:
in response to a symbol type of a symbol of one DL reception corresponding to the one DL reception configuration being different from a symbol type associated with the one DL reception configuration and the one DL reception corresponding to the one DL reception configuration being not transmitted in one slot, using the resource of the one DL reception corresponding to the one DL reception for a data transmission based on a DCI scheduling, or not using the resource of the one DL reception corresponding to the one DL reception for a data transmission based on a DCI scheduling.

13. The HARQ-ACK generating method according to claim 1, further comprising:
in response to the first-type OFDM symbol or the second-type OFDM symbol being separately configured with a DL reception resource set, determining a transmission mode configured for a DL reception configuration.

14. The HARQ-ACK generating method according to claim 13, wherein determining the transmission mode configured for the DL reception configuration comprises:
in response to a DL reception corresponding to the DL reception configuration being configured with a resource from a DL reception resource set corresponding to the first-type OFDM symbol, determining the transmission mode configured for the DL reception configuration as transmitting only in the first-type OFDM symbol;
in response to a DL reception corresponding to the DL reception configuration being configured with a resource from a DL reception resource set corresponding to the second-type OFDM symbol, determining the transmission mode configured for the DL reception configuration as transmitting only in the second-type OFDM symbol; or
in response to a DL reception corresponding to the DL reception configuration being configured with two resources respectively from a DL reception resource set corresponding to the first-type OFDM symbol and a DL reception resource set corresponding to the second-type OFDM symbol, determining the transmission mode configured for the DL reception configuration as that different DL receptions corresponding to the DL reception configuration are transmitted in the first-type OFDM symbol and the second-type OFDM symbol in different slots.

15. The HARQ-ACK generating method according to claim 14, wherein:
in response to the transmission mode configured for the DL reception configuration being determined as transmitting only in the first-type OFDM symbol, the DL reception corresponding to the DL reception configuration being in one slot, and the resource configured for the DL reception corresponding to the DL reception configuration being a second-type OFDM symbol in the one slot, the DL reception corresponding to the DL reception configuration is not transmitted in the one slot, and the resource configured for the DL reception corresponding to the DL reception configuration is not used for a data transmission based on a DCI scheduling; or
in response to the transmission mode configured for the DL reception configuration being determined as transmitting only in the second-type OFDM symbol, the DL reception corresponding to the DL reception configuration being in one slot, and the resource configured for the DL reception corresponding to the DL reception being a first-type OFDM symbol in the one slot, the DL reception corresponding to the DL reception configuration is not transmitted in the one slot, and the resource configured for the DL reception corresponding to the DL reception configuration is not used for a data transmission based on a DCI scheduling.

16. The HARQ-ACK generating method according to claim 1, further comprising:
in response to one type-1 HARQ-ACK codebook comprising at least one HARQ-ACK for a DL reception based on DCI scheduling, determining, according to the predefined rule, the one type-1 HARQ-ACK codebook to be generated.

17. The HARQ-ACK generating method according to claim 16, wherein in response to the first-type resource being configured, determining, according to the predefined rule, the one type-1 HARQ-ACK codebook to be generated comprises:
determining a slot set corresponding to the type-1 HARQ-ACK codebook;
for each of first-type slots in the slot set, generating a HARQ-ACK based on a candidate DL reception resource, and concatenating the HARQ-ACK generated for each of the first-type slots to acquire a first sub-codebook;
for each of second-type slots in the slot set, generating a HARQ-ACK based on the candidate DL reception resource, and concatenating the HARQ-ACK generated for each of the second-type slots to acquire a second sub-codebook; and
concatenating the first sub-codebook and the second sub-codebook to obtain the type-1 HARQ-ACK codebook.

18. The HARQ-ACK generating method according to claim 17, wherein:
in response to a first-type OFDM symbol and a second-type OFDM symbol being configured with a same DL reception resource set, for each of the first-type slots and each of the second-type slots, the candidate DL reception resource refers to a DL reception resource in the same DL reception resource set.

19. The HARQ-ACK generating method according to claim 17, wherein:
in response to a first-type OFDM symbol and a second-type OFDM symbol being respectively configured with different PDSCH resource sets, for each of the first-type slots, the candidate DL reception resource refers to a DL reception resource in a DL reception resource set corresponding to the first-type OFDM symbol; and
for each of the second-type slots, the candidate DL reception resource refers to a DL reception resource in a DL reception resource set corresponding to the second-type OFDM symbol.

20. The HARQ-ACK generating method according to claim 17, wherein:
the slot set comprises a first slot subset and a second slot subset, the first slot subset is associated with a first-type OFDM symbol, and the second slot subset is associated with a second-type OFDM symbol;
for the first slot subset, the first sub-codebook is generated based a slot configured with the first-type OFDM symbol; and
for the second slot subset, the second sub-codebook is generated based a slot configured with the second-type OFDM symbol.

21. The HARQ-ACK generating method according to claim 1, wherein in response to the first-type resource being configured, determining a type-2 HARQ-ACK codebook comprises: configuring counter downlink assignment indicator (DAI) values in DCIs corresponding to a DL reception transmitted in a first-type OFDM symbol and counter DAI values in DCIs corresponding to a DL reception transmitted in a second-type OFDM symbol to be consecutive, and generating the type-2 HARQ-ACK codebook based on a sequence of the counter DAI values in the DCIs corresponding to the DL reception transmitted in the first-type OFDM symbol and the counter DAI values in DCIs corresponding to the DL reception transmitted in the second-type OFDM symbol.

22. The HARQ-ACK generating method according to claim 1, wherein in response to the first-type resource being configured, determining a type-2 HARQ-ACK codebook comprises:
configuring only counter DAI values in DCIs corresponding to a DL reception transmitted in a first-type OFDM symbol to be consecutive, and generating a third sub-codebook based on a sequence of the counter DAI values in the DCIs corresponding to the DL reception transmitted in the first-type OFDM symbol;
configuring only counter DAI values in DCIs corresponding to a DL reception transmitted in a second-type OFDM symbol to be consecutive, and generating a fourth sub-codebook based on a sequence of the counter DAI values in the DCIs corresponding to the DL reception transmitted in the second-type OFDM symbol; and
concatenating the third sub-codebook and the fourth sub-codebook to obtain the type-2 HARQ-ACK codebook.

23. The HARQ-ACK generating method according to claim 21 or 22, comprising: in response to a HARQ-ACK for a DL reception comprising the SPS configuration being configured to multiplex with the type-2 HARQ-ACK codebook, concatenating the HARQ-ACK for the DL reception comprising the SPS configuration at an end of the type-2 HARQ-ACK codebook to obtain a final type-2 HARQ-ACK codebook, wherein the HARQ-ACK for the DL reception comprising the SPS configuration is determined to be generated.

24. The HARQ-ACK generating method according to claim 1, wherein
the first-type resource comprises a subband full-duplex (SBFD) subband or a co-frequency concurrent full-duplex (CCFD) subband, the SBFD subband or the CCFD subband is configured in a DL OFDM symbol or a flexible OFDM symbol, and the SBFD subband comprises a UL subband and a DL subband;
the first-type OFDM symbol refers to an OFDM symbol configured with the first-type resource, and the second-type OFDM symbol refers to an OFDM symbol not configured with the first-type resource; and
the first-type slot comprises a slot configured with the first-type OFDM symbol, and a second-type slot comprises a slot not configured with the first-type OFDM symbol.

25. A hybrid automatic repeat request (HARQ)- acknowledgment (ACK) receiving method, comprising:
transmitting at least one of first information, second information, or third information;
receiving, according to a predefined rule, a HARQ-ACK for a downlink (DL) reception based on information acquired from at least one of the first information, the second information, or the third information;
wherein the DL reception comprises at least one of the following: a semi-persistent scheduling (SPS) configuration, a physical downlink shared channel (PDSCH) scheduled based on downlink control information (DCI), a PDSCH with repetitions, a plurality of PDSCHs scheduled by a single DCI, a periodic or semi-persistent channel state information reference signal (CSI-RS), or a periodic physical downlink control channel (PDCCH); the information acquired from the first information comprises at least one of the following: a location of an orthogonal frequency division multiplexing (OFDM) symbol of the DL reception, a location of a frequency domain resource of the DL reception, or a location of a slot of the DL reception; the information acquired from the second information comprises at least one of the following: a location of a first-type OFDM symbol, a location of a first-type slot, or a location of a first-type resource; the information acquired from the third information comprises at least one of the following: a transmission mode of the DL reception.

26. The HARQ-ACK receiving method according to claim 25, wherein receiving the HARQ-ACK for the DL reception based on the information acquired from the at least one of the first information, the second information, or the third information comprises:
in response to HARQ-ACKs for DL receptions corresponding to one or more activated DL reception configurations being to be multiplexed into a HARQ-ACK codebook, receiving, according to the predefined rule, the HARQ-ACKs for the DL receptions; wherein, the DL reception comprises the SPS configuration.

27. The HARQ-ACK receiving method according to claim 25, wherein receiving the HARQ-ACK for the DL reception based on the information acquired from the at least one of the first information, the second information, or the third information comprises:
in response to one type-1 HARQ-ACK codebook comprising at least one HARQ-ACK for a DL reception based on DCI scheduling, receiving, according to the predefined rule, the one type-1 HARQ-ACK codebook.

28. The HARQ-ACK receiving method according to claim 25, wherein receiving the HARQ-ACK for the DL reception based on the information acquired from the at least one of the first information, the second information, or the third information comprises:
in response to the first-type resource being configured, counter downlink allocation index (DAI) values in DCIs corresponding to a DL reception transmitted in a first-type OFDM symbol and counter DAI values in DCIs corresponding to a DL reception transmitted in a second-type OFDM symbol being configured to be consecutive, receiving a type-2 HARQ-ACK codebook generated based on a sequence of the counter DAI values.

29. A computer device, comprising a memory, a processor, and a computer program stored in the memory and executable on the processor, wherein the processor, when executing the computer program, is configured to implement the HARQ-ACK generating method according to any one of claims 1 to 24 or the HARQ-ACK receiving method according to any one of claims 25 to 28.

30. A computer-readable storage medium, storing a computer program, wherein the computer program, when executed by a processor, is configured to implement the HARQ-ACK generating method according to any one of claims 1 to 24 or the HARQ-ACK receiving method according to any one of claims 25 to 28.
